# EUROPEAN PATENT APPLICATION

(11) **EP 4 586 727 A1**
(43) Date of publication of application: **16.07.2025**
(21) Application number: 23859186.1
(22) Date of filing: 21.08.2023
(51) Int. Cl.: H04W 74/08

(54) **METHOD AND APPARATUS USED IN COMMUNICATION NODE FOR WIRELESS COMMUNICATION**

(30) Priority: 27.08.2022 CN 202211037935
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/113979
(87) International publication number: WO 2024/046152

(57) **Abstract**

Disclosed in the present application are a method and apparatus used in a communication node for wireless communication. The method comprises: in response to a first event, a communication node initiating a first random access process; and sending at least a first Preamble on a first set of time-frequency resources, wherein each time-frequency resource in the first set of time-frequency resources is used for Preamble; the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.

## Description

### Technical Field

The present application relates to transmission methods and apparatuses in wireless communication systems, in particular to transmission methods and apparatuses for coverage enhancement.

### Background Art

Coverage is one of the key factors considered by operators in commercializing cellular communication networks, as it directly affects service quality, capital expenditure (CAPEX), and operational expenditure (OPEX). In most real-world deployment scenarios, uplink (UL) performance may become the bottleneck, while in some emerging vertical use cases, uplink traffic is heavy, such as video upload. In the Rel-17 "NR (New Radio) Coverage Enhancement" work item (WI), extended enhancement is performed for the NR coverage rate of a PUSCH (Physical Uplink Shared Channel), a PUCCH (Physical Uplink Control Channel), and an Msg3 (Message 3). However, improvements to PRACH (Physical Random Access Channel) coverage have not yet been addressed. Since PRACH transmission is critical for many procedures such as initial access and beam failure recovery, Rel-18 established the "Further NR Coverage Enhancements" work item to further enhance the uplink coverage of the PRACH.

### Summary of the Invention

Performing PRACH repetitions in a random access process is an effective means to enhance uplink coverage of the PRACH. However, in some cases, a PRACH repetition is less necessary, for example, the uplink performance is good, or since the random access process is initiated by downlink failures, if too many pieces of user equipment (UE) select PRACH repetitions, random access collisions will increase. Therefore, how to determine whether to perform a PRACH repetition or not in a random access process needs to be enhanced.

To address the above problem, the present application provides a random access solution. In the description of the above problem, an NR system is used as an example; the present application is also applicable to scenarios such as an LTE system; furthermore, although an original intention of the present application targets a Uu air interface, the present application can also be used for a PC5 interface. Furthermore, although the original intention of the present application targets terminal and base station scenarios, the present application is equally applicable to V2X (Vehicle-to-Everything) scenarios and communication scenarios between terminals and relays, as well as between relays and base stations, achieving similar technical effects as in terminal and base station scenarios. Furthermore, although the original intention of the present application targets terminal and base station scenarios, the present application is equally applicable to IAB (Integrated Access and Backhaul) communication scenarios, achieving similar technical effects as in terminal and base station scenarios. Furthermore, although the original intention of the present application targets terrestrial network (TN) scenarios, the present application is equally applicable to non-terrestrial network (NTN) communication scenarios, achieving similar technical effects as in TN scenarios. In addition, adopting a unified solution in different scenarios can also help reduce hardware complexity and costs.

As one embodiment, the explanation of the terminology in the present application refers to the definitions in the TS36 series of the specification protocol of 3GPP.

As one embodiment, the explanation of the terminology in the present application refers to the definitions in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to the definitions in the specification protocol of IEEE (Institute of Electrical and Electronics Engineers).

It should be noted that in case of no conflict, the embodiments and features in any node of the present application may be applied to any other node. In the case of no conflict, the embodiments and the features in the embodiments in the present application can be arbitrarily combined with each other.

The present application discloses a method used in a first node for wireless communication, comprising:
in response to a first event, initiating a first random access process; sending at least a first Preamble on a first set of time-frequency resources, wherein each time-frequency resource in the first set of time-frequency resources is used for Preamble; and
wherein, the number of time-frequency resources comprised in the first set of time-frequency resources depends on at least one of: the first event, or the first information block in the present application, or the first measurement result in the present application, or whether the first BWP (Bandwidth Part) in the present application is configured with a random access resource for four-step random access (4-step RA).

As one embodiment, the number of time-frequency resources comprised in the first set of time-frequency resources depends on one of: the first event, or the first information block in the present application, or the first measurement result in the present application, or whether the first BWP in the present application is configured with a random access resource for four-step random access.

As one embodiment, the number of time-frequency resources comprised in the first set of time-frequency resources depends on at least two of: the first event, or the first information block in the present application, or the first measurement result in the present application, or whether the first BWP in the present application is configured with a random access resource for four-step random access.

As one embodiment, the number of time-frequency resources comprised in the first set of time-frequency resources depends on at least three of: the first event, or the first information block in the present application, or the first measurement result in the present application, or whether the first BWP in the present application is configured with a random access resource for four-step random access.

As one embodiment, the number of time-frequency resources comprised in the first set of time-frequency resources depends on at least four of: the first event, or the first information block in the present application, or the first measurement result in the present application, or whether the first BWP in the present application is configured with a random access resource for four-step random access.

As one embodiment, the problem to be solved by the present application comprises: how to determine whether to perform a PRACH repetition in a random access process.

As one embodiment, the problem to be solved by the present application comprises: how to determine the number of time-frequency resources comprised in the first set of time-frequency resources in the first random access process.

As one embodiment, the characteristics of the above-mentioned method comprise: the number of time-frequency resources comprised in the first set of time-frequency resources is used for determining whether to perform a PRACH repetition.

As one embodiment, the characteristics of the above-mentioned method comprise: the number of time-frequency resources comprised in the first set of time-frequency resources greater than 1 means that a PRACH repetition is performed.

As one embodiment, the characteristics of the above-mentioned method comprise: the number of time-frequency resources comprised in the first set of time-frequency resources equal to 1 means that no PRACH repetition is performed.

As one embodiment, the benefits of the above-mentioned method comprise: reduction of unnecessary PRACH repetitions.

As one embodiment, the benefits of the above-mentioned method comprise: decrease in random access collision probability.

As one embodiment, the benefits of the above-mentioned method comprise: guaranteed random access performance for user equipment executing PRACH repetitions.

As one embodiment, the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR (Beam Failure Recovery).

As one embodiment, the number of time-frequency resources comprised in the first set of time-frequency resources depends on a first information block; when at least the first node is configured with the first information block, the number of time-frequency resources comprised in the first set of time-frequency resources is greater than 1; and when the first node is not configured with the first information block, the number of time-frequency resources comprised in the first set of time-frequency resources is equal to 1.

As one embodiment, the number of time-frequency resources comprised in the first set of time-frequency resources depends on a first measurement result; when at least the first measurement result is less than a first threshold, the number of time-frequency resources comprised in the first set of time-frequency resources is greater than 1; when the first measurement result is greater than a first threshold, the number of time-frequency resources comprised in the first set of time-frequency resources is equal to 1; and the first threshold is configurable.

As one embodiment, in the first random access process, a first BWP is determined; the number of time-frequency resources comprised in the first set of time-frequency resources depends on whether the first BWP is configured with a random access resource for four-step random access; when at least the first BWP is configured with a random access resource for four-step random access, the number of time-frequency resources comprised in the first set of time-frequency resources is greater than 1; and when the first BWP is not configured with a random access resource for four-step random access, the number of time-frequency resources comprised in the first set of time-frequency resources is equal to 1.

According to one aspect of the present application, comprising:
in the first random access process, K1 is determined based on at least a second measurement result;
wherein the K1 is a positive integer not less than 1; and the K1 is not greater than the number of time-frequency resources comprised in the first set of time-frequency resources.

According to one aspect of the present application, comprising:
in the first random access process, a type of the first random access process is set to a four-step random access process;
wherein, the number of time-frequency resources comprised in the first set of time-frequency resources is greater than 1.

According to one aspect of the present application, comprising:
receiving first signaling, wherein the first signaling indicates a first random access resource group; selecting the first random access resource group; determining at least the first Preamble in the first random access resource group;
wherein, the first random access resource group is used for a PRACH repetition; and the number of time-frequency resources comprised in the first set of time-frequency resources is greater than 1.

According to one aspect of the present application, the first signaling indicates a second random access resource group, the second random access resource group is used for a first feature, the first feature is one candidate feature in a first set of candidate features, and one feature in the first set of candidate features is one of RedCap or SDT or an NSAG or an MSG3 repetition; a priority of the first random access resource group being higher than a priority of the second random access resource group is used for selecting the first random access resource group; and the first random access resource group and the second random access resource group are different.

The present application discloses a method used in a second node for wireless communication, comprising:
in a first random access process, receiving at least a first Preamble, wherein the at least first Preamble is sent on a first set of time-frequency resources, and each time-frequency resource in the first set of time-frequency resources is used for Preamble;
wherein, the number of time-frequency resources comprised in the first set of time-frequency resources depends on at least one of: the first event, or the first information block in the present application, or the first measurement result in the present application, or whether the first BWP in the present application is configured with a random access resource for four-step random access.

As one embodiment, the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.

As one embodiment, the number of time-frequency resources comprised in the first set of time-frequency resources depends on a first information block; when at least the first node is configured with the first information block, the number of time-frequency resources comprised in the first set of time-frequency resources is greater than 1; and when the first node is not configured with the first information block, the number of time-frequency resources comprised in the first set of time-frequency resources is equal to 1.

As one embodiment, the number of time-frequency resources comprised in the first set of time-frequency resources depends on a first measurement result; when at least the first measurement result is less than a first threshold, the number of time-frequency resources comprised in the first set of time-frequency resources is greater than 1; when the first measurement result is greater than a first threshold, the number of time-frequency resources comprised in the first set of time-frequency resources is equal to 1; and the first threshold is configurable.

As one embodiment, in the first random access process, a first BWP is determined; the number of time-frequency resources comprised in the first set of time-frequency resources depends on whether the first BWP is configured with a random access resource for four-step random access; when at least the first BWP is configured with a random access resource for four-step random access, the number of time-frequency resources comprised in the first set of time-frequency resources is greater than 1; and when the first BWP is not configured with a random access resource for four-step random access, the number of time-frequency resources comprised in the first set of time-frequency resources is equal to 1.

According to one aspect of the present application, in the first random access process, at least a second measurement result is used for determining K1; the K1 is a positive integer not less than 1; and the K1 is not greater than the number of time-frequency resources comprised in the first set of time-frequency resources.

According to one aspect of the present application, in the first random access process, a type of the first random access process is set to a four-step random access process; and the number of time-frequency resources comprised in the first set of time-frequency resources is greater than 1.

According to one aspect of the present application, comprising:
sending first signaling, wherein the first signaling indicates a first random access resource group;
wherein the first random access resource group is selected; the at least first Preamble is determined in the first random access resource group; the first random access resource group is used for a PRACH repetition, and the number of time-frequency resources comprised in the first set of time-frequency resources is greater than 1.

According to one aspect of the present application, the first signaling indicates a second random access resource group, the second random access resource group is used for a first feature, the first feature is one candidate feature in a first set of candidate features, and one feature in the first set of candidate features is one of RedCap (Reduced Capability) or SDT (Small Data Transmission) or a NSAG (Network Slice AS (Access Stratum) Group) or an MSG3 (Message 3) repetition; a priority of the first random access resource group being higher than a priority of the second random access resource group is used for selecting the first random access resource group; and the first random access resource group and the second random access resource group are different.

The present application discloses a first node for wireless communication, comprising:
a first processor for initiating a first random access process in response to a first event; sending at least a first Preamble on a first set of time-frequency resources, wherein each time-frequency resource in the first set of time-frequency resources is used for Preamble; and
wherein, the number of time-frequency resources comprised in the first set of time-frequency resources depends on at least one of: the first event, or the first information block in the present application, or the first measurement result in the present application, or whether the first BWP in the present application is configured with a random access resource for four-step random access.

The present application discloses a second node for wireless communication, comprising:
a second processor for, in a first random access process, receiving at least a first Preamble, wherein at least the first Preamble is sent on a first set of time-frequency resources, and each time-frequency resource in the first set of time-frequency resources is used for Preamble;
wherein, the number of time-frequency resources comprised in the first set of time-frequency resources depends on at least one of: the first event, or the first information block in the present application, or the first measurement result in the present application, or whether the first BWP in the present application is configured with a random access resource for four-step random access.

As one embodiment, compared with the traditional solution, the present application has the following advantages:
- .reduction of unnecessary PRACH repetitions;
- .decrease in random access collision probability;
- .guaranteed random access performance for user equipment executing PRACH repetitions.

### Brief Description of the Drawings

Other features, objects and advantages of the present application will become more apparent by reading the detailed description of non-limiting embodiments with reference to the following drawings:
FIG. 1 shows a transmission flowchart of at least a first Preamble according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a flowchart of wireless signal transmission according to another embodiment of the present application;
FIG. 7 shows a schematic diagram showing that the number of time-frequency resources comprised in a first set of time-frequency resources depends on the first event according to one embodiment of the present application;
FIG. 8 shows a schematic diagram showing that the number of time-frequency resources comprised in a first set of time-frequency resources depends on a first information block according to one embodiment of the present application;
FIG. 9 shows a schematic diagram showing that the number of time-frequency resources comprised in a first set of time-frequency resources depends on a first measurement result according to one embodiment of the present application;
FIG. 10 shows a schematic diagram showing that the number of time-frequency resources comprised in a first set of time-frequency resources depends on whether a first BWP is configured with a random access resource for four-step random access according to one embodiment of the present application;
FIG. 11 shows a flowchart of a first random access process according to one embodiment of the present application;
FIG. 12 shows a structural block diagram of a processing apparatus for a first node according to one embodiment of the present application; and
FIG. 13 shows a structural block diagram of a processing apparatus for a second node according to one embodiment of the present application.

### Detailed Description of Embodiments

The technical solution of the present application will be further described in detail below in conjunction with drawings. It should be noted that the embodiments and features in the embodiments in the present application can be arbitrarily combined with each other in case of no conflict.

### Embodiment 1

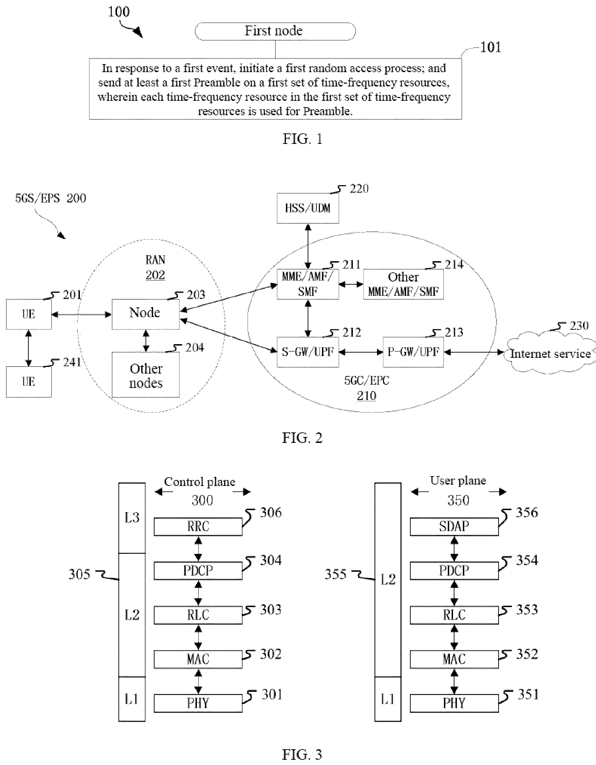

Embodiment 1 illustrates a transmission flowchart of at least a first Preamble according to one embodiment of the present application, as shown in FIG. 1. In FIG. 1, each block represents one step. It should be specifically emphasized that the sequence of blocks in the figure does not indicate temporal ordering of the represented steps.

In Embodiment 1, a first node in the present application initiates a first random access process in step 101 in response to a first event; sends at least a first Preamble on a first set of time-frequency resources, wherein each time-frequency resource in the first set of time-frequency resources is used for Preamble; and wherein, the number of time-frequency resources comprised in the first set of time-frequency resources depends on at least one of: the first event, or the first information block in the present application, or the first measurement result in the present application, or whether the first BWP in the present application is configured with a random access resource for four-step random access.

As one embodiment, when the first event occurs, a first random access process is initiated.

As one embodiment, in response to a first event being triggered, a first random access process is initiated.

As one embodiment, in response to a first event being triggered, a protocol layer where the first event occurs sends an indication to a MAC (Medium Access Control) sublayer, and in response to a MAC sublayer receiving the one indication, a first random access process is initiated.

As one embodiment, the first event occurs in a MAC sublayer.

As one embodiment, the first event occurs in an RRC (Radio Resource Control) sublayer.

As one embodiment, the first event occurs in a physical layer (L1).

As one embodiment, the first event is used for triggering a random access process.

As one embodiment, the first event is used for triggering the first random access process.

As one embodiment, the first event is one candidate event in the first set of candidate events.

As one embodiment, the first event is one candidate event in the second set of candidate events.

As one embodiment, the first random access process is one random access process.

As one embodiment, the first random access process is one four-step random access process.

As one embodiment, the first random access process is a CBRA (Contention Based Random Access) process.

As one embodiment, the first random access process is performed on a first cell.

As one embodiment, the first random access process is performed on a MAC entity corresponding to a cell group to which a first cell belongs.

As one embodiment, the first cell is an SpCell (Special Cell).

As one embodiment, the first cell is a PCell (Primary Cell).

As one embodiment, the first cell is a PSCell (Primary SCG (Secondary Cell Group) Cell, SCG Primary Cell).

As one embodiment, the first set of time-frequency resources is configured for the first cell.

As one embodiment, the first set of time-frequency resources is configured for the first carrier.

As one embodiment, the first set of time-frequency resources is configured for the first BWP.

As one embodiment, the first set of time-frequency resources comprises PRACH occasions on a time domain configured for the first BWP of the first carrier.

As one embodiment, each time-frequency resource in the first set of time-frequency resources is configured for Preamble transmission.

As one embodiment, each time-frequency resource in the first set of time-frequency resources comprises time domain resources and frequency-domain resources.

As one embodiment, a duration of each time-frequency resource in the first set of time-frequency resources comprises at least one symbol.

As one embodiment, each time-frequency resource in the first set of time-frequency resources comprises at least one symbol on a time domain.

As one embodiment, each time-frequency resource in the first set of time-frequency resources is one PRACH occasion.

As one embodiment, each time-frequency resource in the first set of time-frequency resources comprises PRACH occasions on a time domain.

As one embodiment, each time-frequency resource in the first set of time-frequency resources comprises PRACH occasions on a frequency domain.

As one embodiment, each time-frequency resource in the first set of time-frequency resources is an uplink carrier on a frequency domain.

As one embodiment, frequency-domain resources occupied by each time-frequency resource in the first set of time-frequency resources refer to uplink carriers.

As one sub-embodiment of this embodiment, the uplink carrier refers to an NUL (Normal Uplink) carrier.

As one sub-embodiment of this embodiment, the uplink carrier refers to an SUL (Supplementary Uplink) carrier.

As one embodiment, frequency-domain resources occupied by each time-frequency resource in the first set of time-frequency resources comprise a center frequency.

As one embodiment, frequency-domain resources occupied by each time-frequency resource in the first set of time-frequency resources comprise a frequency and a bandwidth.

As one embodiment, if the number of time-frequency resources comprised in the first set of time-frequency resources is greater than 1, at least one Preamble is sent in the first set of time-frequency resources.

As one embodiment, if the number of time-frequency resources comprised in the first set of time-frequency resources is greater than 1, the number of Preambles sent on the first set of time-frequency resources is equal to the number of time-frequency resources comprised in the first set of time-frequency resources.

As one embodiment, if the number of time-frequency resources comprised in the first set of time-frequency resources is greater than 1, the number of Preambles sent on the first set of time-frequency resources is not greater than the number of time-frequency resources comprised in the first set of time-frequency resources.

As one embodiment, if the number of time-frequency resources comprised in the first set of time-frequency resources is greater than 1, power used for sending Preambles on any two time-frequency resources in the first set of time-frequency resources is equal.

As one embodiment, if the number of time-frequency resources comprised in the first set of time-frequency resources is greater than 1, power used for sending Preambles on any two time-frequency resources in the first set of time-frequency resources is unequal.

As one embodiment, if the number of time-frequency resources comprised in the first set of time-frequency resources is greater than 1, power used for sending Preambles on at least two time-frequency resources in the first set of time-frequency resources is equal.

As one embodiment, if the number of time-frequency resources comprised in the first set of time-frequency resources is greater than 1, power used for sending Preambles on at least two time-frequency resources in the first set of time-frequency resources is unequal.

As one embodiment, if the number of time-frequency resources comprised in the first set of time-frequency resources is greater than 1, any 2 time-frequency resources in the first set of time-frequency resources do not overlap on a time domain.

As one embodiment, if the number of time-frequency resources comprised in the first set of time-frequency resources is greater than 1, any 2 time-frequency resources in the first set of time-frequency resources are not continuous on a time domain.

As one embodiment, if the number of time-frequency resources comprised in the first set of time-frequency resources is greater than 1, any 2 time-frequency resources in the first set of time-frequency resources are continuous on a time domain.

As one embodiment, if the number of time-frequency resources comprised in the first set of time-frequency resources is greater than 1, there are at least 2 time-frequency resources in the first set of time-frequency resources that do not overlap on a time domain.

As one embodiment, if the number of time-frequency resources comprised in the first set of time-frequency resources is greater than 1, any 2 time-frequency resources in the first set of time-frequency resources have equal durations on a time domain.

As one embodiment, if the number of time-frequency resources comprised in the first set of time-frequency resources is greater than 1, any 2 time-frequency resources in the first set of time-frequency resources have unequal durations on a time domain.

As one embodiment, if the number of time-frequency resources comprised in the first set of time-frequency resources is greater than 1, there are at least 2 time-frequency resources in the first set of time-frequency resources with equal durations on a time domain.

As one embodiment, if the number of time-frequency resources comprised in the first set of time-frequency resources is greater than 1, there are at least 2 time-frequency resources in the first set of time-frequency resources with unequal durations on a time domain.

As one embodiment, if the number of time-frequency resources comprised in the first set of time-frequency resources is greater than 1, any 2 time-frequency resources in the first set of time-frequency resources overlap on a frequency domain.

As one embodiment, if the number of time-frequency resources comprised in the first set of time-frequency resources is greater than 1, any 2 time-frequency resources in the first set of time-frequency resources do not overlap on a frequency domain.

As one embodiment, if the number of time-frequency resources comprised in the first set of time-frequency resources is greater than 1, there are at least 2 time-frequency resources in the first set of time-frequency resources that overlap on a frequency domain.

As one embodiment, if the number of time-frequency resources comprised in the first set of time-frequency resources is greater than 1, there are at least 2 time-frequency resources in the first set of time-frequency resources that do not overlap on a frequency domain.

As one embodiment, if the number of time-frequency resources comprised in the first set of time-frequency resources is greater than 1, frequency-domain resources occupied by any 2 time-frequency resources in the first set of time-frequency resources are the same.

As one embodiment, if the number of time-frequency resources comprised in the first set of time-frequency resources is greater than 1, frequency-domain resources occupied by any 2 time-frequency resources in the first set of time-frequency resources are different.

As one embodiment, if the number of time-frequency resources comprised in the first set of time-frequency resources is greater than 1, there are at least 2 time-frequency resources in the first set of time-frequency resources that occupy the same frequency-domain resources.

As one embodiment, if the number of time-frequency resources comprised in the first set of time-frequency resources is greater than 1, there are at least 2 time-frequency resources in the first set of time-frequency resources that occupy different frequency-domain resources.

As one embodiment, if the number of time-frequency resources comprised in the first set of time-frequency resources is greater than 1, a Preamble is sent on each time-frequency resource in the first set of time-frequency resources.

As one embodiment, if the number of time-frequency resources comprised in the first set of time-frequency resources is greater than 1, a Preamble is sent on at least 2 time-frequency resources in the first set of time-frequency resources.

As one embodiment, if the number of time-frequency resources comprised in the first set of time-frequency resources is greater than 1, a Preamble is not sent on at least 1 time-frequency resource in the first set of time-frequency resources.

As one embodiment, if the number of time-frequency resources comprised in the first set of time-frequency resources is greater than 1, a Preamble sent on any 2 time-frequency resources in the first set of time-frequency resources is the same.

As one embodiment, if the number of time-frequency resources comprised in the first set of time-frequency resources is greater than 1, a Preamble sent on any 2 time-frequency resources in the first set of time-frequency resources is different.

As one embodiment, if the number of time-frequency resources comprised in the first set of time-frequency resources is greater than 1, a Preamble sent on 2 time-frequency resources in the first set of time-frequency resources is the same.

As one embodiment, if the number of time-frequency resources comprised in the first set of time-frequency resources is greater than 1, a Preamble sent on 2 time-frequency resources in the first set of time-frequency resources is different.

As one embodiment, if the number of time-frequency resources comprised in the first set of time-frequency resources is greater than 1, a Preamble sent on time-frequency resources in the first set of time-frequency resources is selected by UE.

As one embodiment, if the number of time-frequency resources comprised in the first set of time-frequency resources is greater than 1, the first Preamble sent on the first set of time-frequency resources is the first Preamble sent in the first random access process.

As one embodiment, if the number of time-frequency resources comprised in the first set of time-frequency resources is greater than 1, the first Preamble sent on the first set of time-frequency resources is any Preamble sent in the first random access process.

As one embodiment, during selecting an uplink carrier for the first random access process, it is determined whether a PRACH repetition is performed in the first random access process.

As one embodiment, during selecting a random access resource group for the first random access process, it is determined whether a PRACH repetition is performed in the first random access process.

As one embodiment, before setting a type of the first random access process, it is determined whether a PRACH repetition is performed in the first random access process.

As one embodiment, after determining whether a PRACH repetition is performed in the first random access process, the first set of time-frequency resources is determined.

As one embodiment, after setting a type of the first random access process, the first set of time-frequency resources is determined.

As one embodiment, in the first random access process, whether to set a type of the first random access process to a four-step random access process is determined based on a random access resource group of the first random access process.

As one embodiment, in the first random access process, if the first random access resource group is selected as a random access resource group for the first random access process, a type of the first random access process is set to a four-step random access process.

As one embodiment, in the first random access process, a type of the first random access process is set to a four-step random access process based on whether a PRACH repetition is performed in the first random access process.

As one embodiment, in the first random access process, if it is determined that a PRACH repetition is performed in the first random access process, a type of the first random access process is set to a four-step random access process.

As one embodiment, if it is determined that a PRACH repetition is performed in the first random access process, a type of the first random access process is set to a four-step random access process.

As one sub-embodiment of this embodiment, if it is determined that a PRACH repetition is performed in the first random access process, regardless of whether RSRP (Reference Signal Received Power) referenced by a downlink pathloss reference is higher than msgA-RSRP-Threshold, a type of the first random access process is set to a four-step random access process.

As one sub-embodiment of this embodiment, if it is determined that a PRACH repetition is performed in the first random access process, regardless of whether the first BWP is configured with a random access resource for two-step random access (2-step RA), a type of the first random access process is set to a four-step random access process.

As one sub-embodiment of this embodiment, if it is determined that a PRACH repetition is performed in the first random access process, a type of the first random access process is set to a four-step random access process or a two-step random access process regardless of whether RSRP of a downlink pathloss reference is higher than msgA-RSRP-Threshold; and the first BWP is configured with a random access resource for two-step random access and a random access resource for four-step random access.

As one embodiment, if it is determined that no PRACH repetition is performed in the first random access process, a type of the first random access process being set to a four-step random access process or a two-step random access process is related to whether RSRP of a downlink pathloss reference is higher than msgA-RSRP-Threshold; and the first BWP is configured with a random access resource for two-step random access and a random access resource for four-step random access.

As one sub-embodiment of this embodiment, if it is determined that no PRACH repetition is performed in the first random access process, when RSRP of a downlink pathloss reference is higher than msgA-RSRP-Threshold, a type of the first random access process is set to a two-step random access process; and when RSRP of a downlink pathloss reference is not higher than msgA-RSRP-Threshold, a type of the first random access process is set to a four-step random access process.

As one embodiment, if it is determined that no PRACH repetition is performed in the first random access process, and the first BWP is only configured with a random access resource for two-step random access, a type of the first random access process is set to a two-step random access process.

As one embodiment, if it is determined that no PRACH repetition is performed in the first random access process, and the first BWP is only configured with a random access resource for four-step random access, a type of the first random access process is set to a four-step random access process.

As one embodiment, "the number of time-frequency resources comprised in the first set of time-frequency resources is greater than 1" may be replaced by: a PRACH repetition is performed in the first random access process.

As one embodiment, "the number of time-frequency resources comprised in the first set of time-frequency resources is equal to 1" may be replaced by: no PRACH repetition is performed in the first random access process.

As one embodiment, "the number of time-frequency resources comprised in the first set of time-frequency resources is greater than 1" may be replaced by: the first random access resource group is selected in the first random access process.

As one embodiment, "the number of time-frequency resources comprised in the first set of time-frequency resources is equal to 1" may be replaced by: the first random access resource group is not selected in the first random access process.

As one embodiment, "the number of time-frequency resources comprised in the first set of time-frequency resources is greater than 1" may be replaced by: a PRACH repetition is considered to be applicable to the first random access process.

As one embodiment, "the number of time-frequency resources comprised in the first set of time-frequency resources is equal to 1" may be replaced by: a PRACH repetition is considered not applicable to the first random access process.

As one embodiment, "the number of time-frequency resources comprised in the first set of time-frequency resources is greater than 1" may be replaced by: the first random access resource group is selected in the first random access process.

As one embodiment, "the number of time-frequency resources comprised in the first set of time-frequency resources is equal to 1" may be replaced by: the first random access resource group is not selected in the first random access process.

As one embodiment, the "the number of time-frequency resources comprised in the first set of time-frequency resources depends on" may be replaced by: whether the first random access resource group is selected in the first random access process depends on; the "the number of time-frequency resources comprised in the first set of time-frequency resources is greater than 1" may be replaced by: the first random access resource group is selected in the first random access process; and the "the number of time-frequency resources comprised in the first set of time-frequency resources is equal to 1" may be replaced by: the first random access resource group is not selected in the first random access process.

As one embodiment, the "the number of time-frequency resources comprised in the first set of time-frequency resources depends on" may be replaced by: whether to perform a PRACH repetition in the first random access process depends on; the "the number of time-frequency resources comprised in the first set of time-frequency resources is greater than 1" may be replaced by: a PRACH repetition is performed in the first random access process; the "the number of time-frequency resources comprised in the first set of time-frequency resources is equal to 1" may be replaced by: no PRACH repetition is performed in the first random access process.

As one embodiment, a PRACH repetition being performed in the first random access process comprises: the number of time-frequency resources comprised in the first set of time-frequency resources is greater than 1.

As one embodiment, no PRACH repetition being performed in the first random access process comprises: the number of time-frequency resources comprised in the first set of time-frequency resources is equal to 1.

As one embodiment, the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.

As one embodiment, the number of time-frequency resources comprised in the first set of time-frequency resources depends on a first information block; when at least the first node is configured with the first information block, the number of time-frequency resources comprised in the first set of time-frequency resources is greater than 1; and when the first node is not configured with the first information block, the number of time-frequency resources comprised in the first set of time-frequency resources is equal to 1.

As one embodiment, the number of time-frequency resources comprised in the first set of time-frequency resources depends on a first measurement result; when at least the first measurement result is less than a first threshold, the number of time-frequency resources comprised in the first set of time-frequency resources is greater than 1; when the first measurement result is greater than a first threshold, the number of time-frequency resources comprised in the first set of time-frequency resources is equal to 1; and the first threshold is configurable.

As one embodiment, in the first random access process, a first BWP is determined; the number of time-frequency resources comprised in the first set of time-frequency resources depends on whether the first BWP is configured with a random access resource for four-step random access; when at least the first BWP is configured with a random access resource for four-step random access, the number of time-frequency resources comprised in the first set of time-frequency resources is greater than 1; and when the first BWP is not configured with a random access resource for four-step random access, the number of time-frequency resources comprised in the first set of time-frequency resources is equal to 1.

As one embodiment, the number of time-frequency resources comprised in the first set of time-frequency resources depends on the first event and a first information block.

As one sub-embodiment of this embodiment, when at least the first event belongs to a first set of candidate events and the first node is configured with the first information block, the number of time-frequency resources comprised in the first set of time-frequency resources is greater than 1; and when the first event belongs to a second set of candidate events, or when the first node is not configured with the first information block, the number of time-frequency resources comprised in the first set of time-frequency resources is equal to 1.

As one sub-embodiment of this embodiment, only when at least the first event belongs to a first set of candidate events and the first node is configured with the first information block, the number of time-frequency resources comprised in the first set of time-frequency resources is greater than 1.

As one sub-embodiment of this embodiment, as long as the first event belongs to a second set of candidate events, or the first node is not configured with the first information block, the number of time-frequency resources comprised in the first set of time-frequency resources is equal to 1.

As one embodiment, the number of time-frequency resources comprised in the first set of time-frequency resources depends on at least a first information block and a first measurement result.

As one sub-embodiment of this embodiment, when at least the first node is configured with the first information block and the first measurement result is less than a first threshold, the number of time-frequency resources comprised in the first set of time-frequency resources is greater than 1; and when the first node is not configured with the first information block, or when the first measurement result is greater than a first threshold, the number of time-frequency resources comprised in the first set of time-frequency resources is equal to 1.

As one sub-embodiment of this embodiment, only when at least the first node is configured with the first information block and the first measurement result is less than a first threshold, the number of time-frequency resources comprised in the first set of time-frequency resources is greater than 1.

As one sub-embodiment of this embodiment, as long as the first node is not configured with the first information block, or the first measurement result is greater than a first threshold, the number of time-frequency resources comprised in the first set of time-frequency resources is equal to 1.

As one embodiment, the number of time-frequency resources comprised in the first set of time-frequency resources depends on at least the first event, a first information block, and a first measurement result.

As one sub-embodiment of this embodiment, when at least the first event belongs to a first set of candidate events and the first node is configured with the first information block and the first measurement result is less than a first threshold, the number of time-frequency resources comprised in the first set of time-frequency resources is greater than 1; and when the first event belongs to a second set of candidate events, or when the first node is not configured with the first information block, or when the first measurement result is greater than a first threshold, the number of time-frequency resources comprised in the first set of time-frequency resources is equal to 1.

As one sub-embodiment of this embodiment, only when at least the first event belongs to a first set of candidate events and the first node is configured with the first information block and the first measurement result is less than a first threshold, the number of time-frequency resources comprised in the first set of time-frequency resources is greater than 1.

As one sub-embodiment of this embodiment, as long as the first event belongs to a second set of candidate events, or the first node is not configured with the first information block, or the first measurement result is greater than a first threshold, the number of time-frequency resources comprised in the first set of time-frequency resources is equal to 1.

As one embodiment, only when at least the first node is configured with the first information block and the first measurement result is less than a first threshold, the number of time-frequency resources comprised in the first set of time-frequency resources is greater than 1; otherwise, the number of time-frequency resources comprised in the first set of time-frequency resources is equal to 1.

As one embodiment, only when at least the first event belongs to a first set of candidate events, and the first node is configured with the first information block, and the first measurement result is less than a first threshold, the number of time-frequency resources comprised in the first set of time-frequency resources is greater than 1; otherwise, the number of time-frequency resources comprised in the first set of time-frequency resources is equal to 1.

As one embodiment, only when at least the first BWP is configured with a random access resource for four-step random access, and the first node is configured with the first information block, and the first measurement result is less than a first threshold, the number of time-frequency resources comprised in the first set of time-frequency resources is greater than 1; otherwise, the number of time-frequency resources comprised in the first set of time-frequency resources is equal to 1.

As one embodiment, only when at least the first event belongs to a first set of candidate events, and the first BWP is configured with a random access resource for four-step random access, and the first node is configured with the first information block, and the first measurement result is less than a first threshold, the number of time-frequency resources comprised in the first set of time-frequency resources is greater than 1; otherwise, the number of time-frequency resources comprised in the first set of time-frequency resources is equal to 1.

As one embodiment, the first node is not configured with contention free random access resources.

As one embodiment, the first node is configured with contention free random access resources, and the contention free random access resources are not used for the first event.

As one embodiment, the PRACH repetition comprises: an Msg1 (Message 1) repetition.

As one embodiment, the PRACH repetition comprises: a RACH repetition.

As one embodiment, the PRACH repetition comprises: sending a plurality of PRACHs in one random access attempt.

As one embodiment, the PRACH repetition comprises: sending a plurality of PRACHs between two PREAMBLE_TRANSMISSION_COUNTER updates.

As one embodiment, the PRACH repetition comprises: sending a plurality of PRACHs between two PREAMBLE_POWER_RAMPING_COUNTER updates.

As one embodiment, the PRACH repetition comprises: a plurality of consecutive PRACHs.

As one embodiment, the first set of time-frequency resources is used for one PRACH repetition.

As one embodiment, for all Preambles sent on the first set of time-frequency resources, PDCCH (Physical Downlink Control Channel) transmission scrambled by only one RA-RNTI (Radio Network Temporary Identifier) is monitored in one ra-ResponseWindow.

As one embodiment, for all Preambles sent on the first set of time-frequency resources, PDCCH transmission scrambled by at least one RA-RNTI is monitored in one ra-ResponseWindow.

As one embodiment, for all Preambles sent on the first set of time-frequency resources, PDCCH transmission scrambled by the same RA-RNTI is monitored in one ra-ResponseWindow.

As one embodiment, the meaning of "depends on" comprises "is related to".

As one embodiment, the meaning of "AAA depends on BBB" comprises: AAA is related to BBB.

As one embodiment, the meaning of "AAA depends on BBB" comprises: AAA is only related to BBB.

As one embodiment, the meaning of "AAA depends on BBB" comprises: AAA is related to at least BBB.

As one embodiment, the meaning of "AAA depends on BBB" comprises: BBB is used for determining AAA.

As one embodiment, the meaning of "AAA depends on BBB" comprises: only BBB is used for determining AAA.

As one embodiment, the meaning of "AAA depends on BBB" comprises: at least BBB is used for determining AAA.

As one embodiment, the meaning of "AAA depends on BBB" comprises: BBB has an impact on AAA.

As one embodiment, the above-mentioned AAA is: the number of time-frequency resources comprised in the first set of time-frequency resources.

As one sub-embodiment of this embodiment, the above-mentioned BBB is: the first event.

As one sub-embodiment of this embodiment, the above-mentioned BBB is: the first information block.

As one sub-embodiment of this embodiment, the above-mentioned BBB is: the first measurement result.

As one sub-embodiment of this embodiment, the above-mentioned BBB is: whether the first BWP is configured with a random access resource for four-step random access.

As one embodiment, the above-mentioned AAA is: the first carrier is an NUL or an SUL.

As one sub-embodiment of this embodiment, the above-mentioned BBB is: the first event.

As one sub-embodiment of this embodiment, the above-mentioned BBB is: the first information block.

As one sub-embodiment of this embodiment, the above-mentioned BBB is: the first measurement result.

As one sub-embodiment of this embodiment, the above-mentioned BBB is: whether to be configured with a random access resource for four-step random access.

As one embodiment, in the first random access process, the first BWP is determined.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terms. The 5GS/EPS 200 comprises at least one of: a UE (User Equipment) 201, a RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown, the 5GS/EPS provides packet-switched services. However, those skilled in the art will readily understand that the various concepts presented throughout the present application can be extended to networks or other cellular networks that provide circuit switching services. RAN comprises a node 203 and other node 204. The node 203 provides user and control plane protocol termination towards the UE201. The node 203 may be connected to the other node 204 via an Xn interface (e.g., backhaul)/an X2 interface. The node 203 may also be referred to as a base station, a base transceiver station, a radio base station, a radio transceiver, a transceiver function, a basic service set (BSS), an extended service set (ESS), a TRP (Transmitter Receiver Point), or some other suitable terms. The node 203 provides the UE201 with access points to the 5GC/EPC210. Examples of UE201 comprise cellular telephones, smart phones, Session Initiation Protocol (SIP) telephones, laptops, personal digital assistants (PDAs), satellite radios, non-terrestrial base station communications, satellite mobile communications, global positioning systems, multimedia apparatuses, video apparatuses, digital audio players (for example, MP3 players), cameras, game consoles, drones, aircrafts, narrowband Internet of Things devices, machine type communication devices, land transportation vehicles, automobiles, wearable devices, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The node 203 is connected to the 5GC/EPC210 via an S1/NG interface. The 5GC/EPC210 comprises MME (Mobility Management Entity)/AMF (Authentication Management Field)/SMF (Session Management Function) 211, other MME/AMF/SMF214, S-GW (Service Gateway)/UPF (User Plane Function) 212, and P-GW (Packet Date Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet services 230. The Internet services 230 comprise an operator's corresponding Internet protocol service, which may specifically comprise the Internet, intranets, IMS (IP Multimedia Subsystem), and packet switching streaming services.

As one embodiment, the UE201 corresponds to the first node in the present application.

As one embodiment, the UE201 is a piece of user equipment (UE).

As one embodiment, the UE201 is one base station (BS) device.

As one embodiment, the UE201 is one relay device.

As one embodiment, the node 203 corresponds to the second node in the present application.

As one embodiment, the node 203 is one base station device.

As one embodiment, the node 203 is a piece of user equipment.

As one embodiment, the node 203 is one relay device.

As one embodiment, the node 203 is a gateway.

Typically, the UE201 is a piece of user equipment, and the node 203 is one base station device.

As one embodiment, the user equipment supports transmission in Non-Terrestrial Networks (NTN).

As one embodiment, the user equipment supports transmission in Terrestrial Networks.

As one embodiment, the user equipment supports transmission in networks with large latency differences.

As one embodiment, the user equipment supports dual connection (DC) transmission.

As one embodiment, the user equipment comprises an aircraft.

As one embodiment, the user equipment comprises a vehicle terminal.

As one embodiment, the user equipment comprises a vessel.

As one embodiment, the user equipment comprises an Internet of Things terminal.

As one embodiment, the user equipment comprises an Industrial IoT terminal.

As one embodiment, the user equipment comprises a device supporting low-latency and high-reliability transmission.

As one embodiment, the user equipment comprises a test device.

As one embodiment, the user equipment comprises a signaling tester.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device supports transmission in Non-Terrestrial Networks.

As one embodiment, the base station device supports transmission in networks with large latency differences.

As one embodiment, the base station device supports transmission in Terrestrial Networks.

As one embodiment, the base station device comprises a macro cellular base station.

As one embodiment, the base station device comprises a micro cell base station.

As one embodiment, the base station device comprises a pico cell base station.

As one embodiment, the base station device comprises a femtocell.

As one embodiment, the base station device comprises a base station device supporting large latency differences.

As one embodiment, the base station device comprises an aerial platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB-node (Integrated Access and Backhaul node).

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises user equipment.

As one embodiment, the relay device comprises a base station device.

### Embodiment 3

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300. FIG. 3 shows a radio protocol architecture for the control plane 300 using three layers: Layer 1, Layer 2, and Layer 3. Layer 1 (L1 layer) is the lowest layer and implements various PHY (physical layer) signal processing functions. The L1 layer will be referred to herein as PHY301. Layer 2 (L2 layer) 305 is above the PHY301 and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security through data packet encryption and provides handover support. The RLC sublayer 303 provides segmentation and reassembly of upper layer data packets, retransmission of lost data packets, and reordering of data packets to compensate for disordered reception caused by a HARQ (Hybrid Automatic Repeat Request). The MAC sublayer 302 provides multiplexing between logical channels and transport channels. The MAC sublayer 302 is also responsible for assigning various radio resources (for example, resource blocks) in a cell. The MAC sublayer 302 is also responsible for HARQ operations. The RRC (Radio Resource Control) sublayer 306 in Layer 3 (L3 layer) in the control plane 300 is responsible for obtaining radio resources (that is, radio bearers) and configuring the lower layer by using the RRC signaling. The radio protocol architecture of the user plane 350 comprises Layer 1 (L1 layer) and Layer 2 (L2 layer). Regarding the radio protocol architecture in the user plane 350, the physical layer 351, a PDCP sublayer 354 in L2 layer 355, an RLC sublayer 353 in L2 layer 355 and a MAC sublayer 352 in L2 layer 355 are generally the same as the corresponding layers and sublayers in the control plane 300, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS streams and data radio bearers (DRBs) to support service diversity.

As one embodiment, the wireless protocol architecture in FIG. 3 is applicable to the first node in the present application.

As one embodiment, the wireless protocol architecture in FIG. 3 is applicable to the second node in the present application.

As one embodiment, each Preamble sent on the first set of time-frequency resources in the present application is generated in the PHY301 or PHY351.

As one embodiment, the first Preamble in the present application is generated in the PHY301 or PHY351.

As one embodiment, the first signaling in the present application is generated in the RRC306.

As one embodiment, the first signaling in the present application is generated in the MAC302 or MAC352.

As one embodiment, the first signaling in the present application is generated in the PHY301 or PHY351.

### Embodiment 4

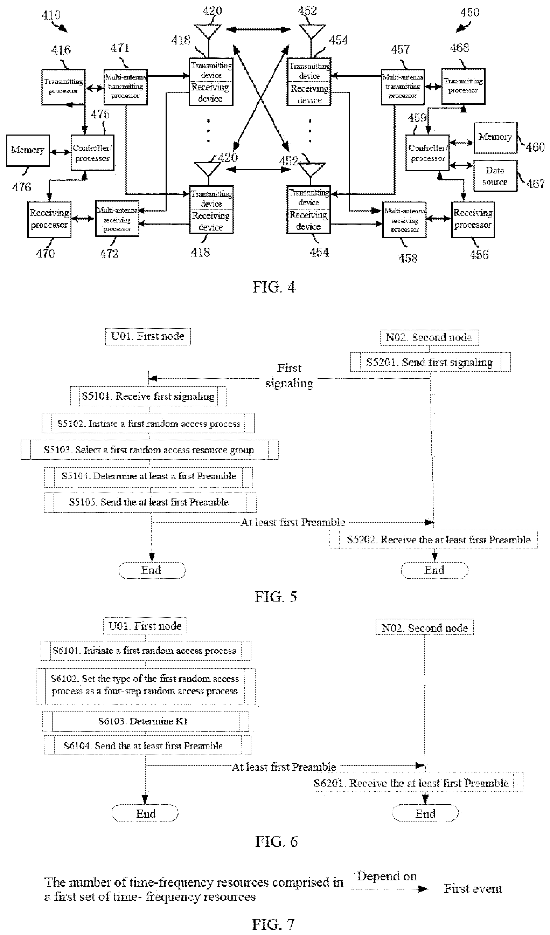

Embodiment 4 shows a schematic diagram of a first communication device and a second communication device according to the present application, as shown in FIG. 4. FIG. 4 is a block diagram of a first communication device 450 and a second communication device 410 that communicate with each other in the access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper layer data packets from the core network are provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logical channels and transport channels, and radio resource assignment of the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for the L1 layer (that is, the physical layer). The transmitting processor 416 implements encoding and interleaving to facilitate forward error correction (FEC) at the second communication device 410, and mapping of signal clusters based on various modulation schemes (for example, Binary Phase Shift Keying (BPSK), Quadrature Phase Shift Keying (QPSK), M-Phase Shift Keying (M-PSK), M-Quadrature Amplitude Modulation (M-QAM)). The multi-antenna transmitting processor 471 performs digital spatial precoding of the encoded and modulated symbols, comprising codebook-based precoding and non-codebook-based precoding, and beamforming processing, to generate one or more spatial streams. The transmitting processor 416 then maps each spatial stream to a subcarrier, multiplexes with a reference signal (for example, pilot) in the time domain and/or frequency domain, and then uses Inverse Fast Fourier Transform (IFFT) to generate a physical channel carrying a time domain multi-carrier symbol stream. The multi-antenna transmitting processor 471 then performs a simulated precoding/beamforming operation on the time domain multi-carrier symbol stream. Each transmitting device 418 converts the baseband multi-carrier symbol stream provided by the multi-antenna transmitting processor 471 into a radio frequency stream, and then provides it to different antennas 420.

In transmission from the second communication device 410 to the first communication device 450, at the first communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of the L1 layer. The multi-antenna receiving processor 458 performs receiving simulated precoding/beamforming operations on the baseband multi-carrier symbol stream from the receiving device 454. The receiving processor 456 uses Fast Fourier Transform (FFT) to convert the baseband multi-carrier symbol stream from the time domain to the frequency domain after the receiving simulated precoding/beamforming operations. In the frequency domain, the physical layer data signals and the reference signals are demultiplexed by the receiving processor 456, where the reference signals are used for channel estimation, and the data signals undergo multi-antenna detection in the multi-antenna receiving processor 458 to recover any spatial stream destined for the first communication device 450. Symbols on each spatial stream are demodulated and recovered in the receiving processor 456 and generate soft decisions. The receiving processor 456 then decodes and deinterleaves the soft decisions to recover upper layer data and control signals transmitted by the second communication device 410 on the physical channel. The upper layer data and control signals are then provided to the controller/processor 459. The controller/processor 459 implements the functions of the L2 layer. The controller/processor 459 may be associated with a memory 460 storing program codes and data. The memory 460 may be referred to as a computer readable medium. In transmission from the second communication device 410 to the second communication device 450, the controller/processor 459 provides demultiplexing between transport channels and logical channels, packet reassembly, decryption, header decompression, and control signal processing to recover upper layer data packets from the core network. The upper layer data packets are then provided to all protocol layers above the L2 layer. Various control signals may also be provided to L3 for L3 processing.

In transmission from the first communication device 450 to the second communication device 410, at the first communication device 450, the data source 467 is used for providing upper layer data packets to the controller/processor 459. The data source 467 represents all protocol layers above the L2 layer. Similar to the transmission function at the second communication device 410 as described for the transmission from the second communication device 410 to the first communication device 450, the controller/processor 459 implements header compression, encryption, packet segmentation and reordering, and multiplexing between logical channels and transport channels based on wireless resource assignment, thereby implementing L2 layer functions for the user plane and the control plane. The controller/processor 459 is also responsible for retransmission of lost packets and signaling to the second communication device 410. The transmitting processor 468 performs modulation mapping and channel encoding processing, and the multi-antenna transmitting processor 457 performs digital multi-antenna spatial precoding, comprising codebook-based precoding and non-codebook-based precoding, and beamforming processing. The transmitting processor 468 modulates the resulting spatial streams into multi-carrier/single-carrier symbol streams. These streams undergo simulated precoding/beamforming operations in the multi-antenna transmitting processor 457 before being provided to different antennas 452 via the transmitting device 454. Each transmitting device 454 first converts baseband symbol streams provided from the multi-antenna transmitting processor 457 into radio frequency symbol streams, and then supplies the radio frequency symbol streams to the antenna 452.

In transmission from the first communication device 450 to the second communication device 410, the function at the second communication device 410 is similar to the reception function at the first communication device 450 as described for the transmission from the second communication device 410 to the first communication device 450. Each receiving device 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements the functions of the L2 layer. The controller/processor 475 may be associated with a memory 476 storing program codes and data. The memory 476 may be referred to as a computer readable medium. In transmission from the first communication device 450 to the second communication device 410, the controller/processor 475 provides demultiplexing between transport channels and logical channels, packet reassembly, decryption, header decompression, and control signal processing to recover upper layer data packets from the UE450. The upper layer data packets from the controller/processor 475 may be provided to the core network.

As one embodiment, the first communication device 450 comprises: at least one processor and at least one memory, and the at least one memory comprises computer program codes; the at least one memory and the computer program codes are configured to be used together with the at least one processor, the first communication device 450 at least: initiates a first random access process in response to a first event; sends at least a first Preamble on a first set of time-frequency resources, wherein each time-frequency resource in the first set of time-frequency resources is used for Preamble; and wherein, the number of time-frequency resources comprised in the first set of time-frequency resources depends on at least one of: the first event, or the first information block in the present application, or the first measurement result in the present application, or whether the first BWP in the present application is configured with a random access resource for four-step random access.

As one embodiment, the first communication device 450 comprises: a memory storing a computer readable instruction program, and the computer readable instruction program generates an action when executed by at least one processor, the action comprising: initiating a first random access process in response to a first event; sending at least a first Preamble on a first set of time-frequency resources, wherein each time-frequency resource in the first set of time-frequency resources is used for Preamble; and wherein, the number of time-frequency resources comprised in the first set of time-frequency resources depends on at least one of: the first event, or the first information block in the present application, or the first measurement result in the present application, or whether the first BWP in the present application is configured with a random access resource for four-step random access.

As one embodiment, the second communication device 410 comprises: at least one processor and at least one memory, and the at least one memory comprises computer program codes; the at least one memory and the computer program codes are configured to be used together with the at least one processor. The second communication device 410 at least: receives a first Preamble in a first random access process, wherein the at least first Preamble is sent on a first set of time-frequency resources, and each time-frequency resource in the first set of time-frequency resources is used for Preamble; wherein, the number of time-frequency resources comprised in the first set of time-frequency resources depends on at least one of: the first event, or the first information block in the present application, or the first measurement result in the present application, or whether the first BWP in the present application is configured with a random access resource for four-step random access.

As one embodiment, the second communication device 410 comprises: a memory storing a computer readable instruction program, and the computer readable instruction program generates an action when executed by at least one processor, the action comprising: receiving at least a first Preamble in a first random access process, wherein the at least first Preamble is sent on a first set of time-frequency resources, and each time-frequency resource in the first set of time-frequency resources is used for Preamble; wherein, the number of time-frequency resources comprised in the first set of time-frequency resources depends on at least one of: the first event, or the first information block in the present application, or the first measurement result in the present application, or whether the first BWP in the present application is configured with a random access resource for four-step random access.

As one embodiment, at least one of the antenna 452, the transmitting device 454, the transmitting processor 468, and the controller/processor 459 is used for sending the first Preamble.

As one embodiment, at least one of the antenna 420, the receiving device 418, the receiving processor 470, and the controller/processor 475 is used for receiving the first Preamble.

As one embodiment, at least one of the antenna 452, the transmitting device 454, the transmitting processor 468, the controller/processor 459 sends at least one Preamble on the first set of time-frequency resources.

As one embodiment, at least one of the antenna 420, the receiving device 418, the receiving processor 470, and the controller/processor 475 is used for receiving at least one Preamble sent on the first set of time-frequency resources.

As one embodiment, at least one of the antenna 452, the receiving device 454, the receiving processor 456, and the controller/processor 459 is used for receiving the first signaling.

As one embodiment, at least one of the antenna 420, the transmitting device 418, the transmitting processor 416, and the controller/processor 475 is used for sending the first signaling.

As one embodiment, the first communication device 450 corresponds to a first node in the present application.

As one embodiment, the first communication device 450 is a piece of user equipment.

As one embodiment, the first communication device 450 is one base station (gNB/eNB/ng-eNB).

As one embodiment, the first communication device 450 is one relay device.

As one embodiment, the second communication device 410 corresponds to a second node in the present application.

As one embodiment, the second communication device 410 is a piece of user equipment.

As one embodiment, the second communication device 410 is one base station (gNB/eNB/ng-eNB).

As one embodiment, the second communication device 410 is one relay device.

### Embodiment 5

Embodiment 5 illustrates a flowchart of wireless signal transmission according to one embodiment of the present application, as shown in FIG. 5. It is particularly noted that the order in the present example does not limit the order of signal transmission and the order of implementation in the present application.

For **the first node U01,** in step S5101, first signaling is received, wherein the first signaling indicates a first random access resource group; in step S5102, a first random access process is initiated in response to a first event; in step S5103, the first random access resource group is selected; in step S5104, at least the first Preamble is determined in the first random access resource group; and in step S5105, at least a first Preamble is sent on a first set of time-frequency resources, wherein each time-frequency resource in the first set of time-frequency resources is used for Preamble.

For **the second node N02,** in step S5201, the first signaling is sent; and in step S5202, a Preamble is received.

In Embodiment 5, the first random access resource group is used for a PRACH repetition; and the number of time-frequency resources comprised in the first set of time-frequency resources is greater than 1.

As one embodiment, the first node U01 is a piece of user equipment.

As one embodiment, the first node U01 is one base station device.

As one embodiment, the first node U01 is one relay device.

As one embodiment, the second node N02 is one base station device.

As one embodiment, the second node N02 is a piece of user equipment.

As one embodiment, the second node N02 is one relay device.

As one embodiment, the first node U01 is a piece of user equipment, and the second node N02 is one base station device.

As one embodiment, the first node U01 is a piece of user equipment, and the second node N02 is one relay device.

As one embodiment, the first node U01 is a piece of user equipment, and the second node N02 is a piece of user equipment.

As one embodiment, the first node U01 is one base station device, and the second node N02 is one base station device.

As one embodiment, the first node U01 is one relay device, and the second node N02 is one base station device.

As one embodiment, the first node U01 and the second node N02 are connected via a uu interface.

As one embodiment, the first node U01 and the second node N02 are connected via an Xn interface.

As one embodiment, the first node U01 and the second node N02 are connected via an X2 interface.

As one embodiment, the first node U01 and the second node N02 are connected via a PC5 interface.

As one embodiment, the first node U01 and the second node N02 are connected via an air interface.

As one embodiment, the first random access resource group is an only group of random access resources configured for the first cell for a PRACH repetition.

As one embodiment, the first random access resource group is one group of random access resources among a plurality of group of random access resources configured for the first cell for a PRACH repetition.

As one embodiment, the first signaling is used for determining the first random access resource group.

As one embodiment, the first signaling is used for configuring the first random access resource group.

As one embodiment, the first signaling is used for determining each random access resource in the first random access resource group.

As one embodiment, the first random access resource group is configured for the first cell.

As one embodiment, the first random access resource group is configured for the first carrier.

As one embodiment, the first random access resource group is configured for the first BWP.

As one embodiment, the first random access resource group is configured for the first BWP of the first carrier of the first cell.

As one embodiment, the first carrier is configured for the first cell.

As one embodiment, the first carrier is one uplink carrier configured for the first cell.

As one embodiment, the first carrier is an NUL.

As one embodiment, the first carrier is an SUL.

As one embodiment, the first carrier is one of an NUL or an SUL.

As one embodiment, the first carrier is an NUL, and only an NUL can be configured with random access resources for a PRACH repetition.

As one embodiment, the first carrier is an SUL, and only an SUL can be configured with random access resources for a PRACH repetition.

As one embodiment, the first BWP is configured for the first cell.

As one embodiment, the first BWP is configured for the first carrier.

As one embodiment, the first BWP is one uplink BWP configured for the first cell.

As one embodiment, the first BWP is one uplink BWP configured for the first carrier.

As one embodiment, the first BWP is an initial BWP.

As one embodiment, the first BWP is not an initial BWP.

As one embodiment, the first BWP is a default BWP.

As one embodiment, the first random access resource group is exclusively used for a feature combination.

As one embodiment, the first random access resource group can be combined with other features.

As one embodiment, the first random access resource group cannot be combined with other features.

As one embodiment, the first random access resource group is used only for a PRACH repetition.

As one embodiment, the first random access resource group is used at least for a PRACH repetition.

As one embodiment, the first random access resource group is exclusively used only for a PRACH repetition.

As one embodiment, the first random access resource group is exclusively used for at least a PRACH repetition.

As one embodiment, the first random access resource group can be used for a PRACH repetition.

As one embodiment, the first random access resource group is configured with a PRACH repetition indication.

As one embodiment, each of the first random access resource group is used for indicating a PRACH repetition.

As one embodiment, each random access resource in the first random access resource group is used for a PRACH repetition.

As one embodiment, each random access resource in the first random access resource group indicates a PRACH repetition.

As one embodiment, the first signaling comprising a PRACH repetition indication for the first random access resource group is used for determining that the first random access resource group can be used for a PRACH repetition.

As one embodiment, the first signaling comprises at least one RRC message.

As one embodiment, the first signaling comprises at least one RRC IE (Information Element).

As one embodiment, the first signaling comprises at least one RRC field.

As one embodiment, the first signaling comprises an SIB1 (System Information Block 1) message.

As one embodiment, the first signaling comprises a ServingCellConfigCommonSIB IE.

As one embodiment, the first signaling comprises an UplinkConfigCommonSIB IE.

As one embodiment, the first signaling comprises a BWP-UplinkCommon IE.

As one embodiment, the first signaling comprises an UplinkConfigCommon IE.

As one embodiment, the first signaling comprises a RACH-ConfigCommon IE.

As one embodiment, the first signaling comprises at least one RRC field in a RACH-ConfigCommon IE.

As one embodiment, the first signaling comprises one RRC field whose name comprises "featureCombinationPreamblesList".

As one embodiment, the first signaling comprises at least one RRC IE whose name comprises "FeatureCombinationPreambles".

As one embodiment, the first signaling comprises at least one RRC IE whose name comprises "startPreambleForThisPartition".

As one embodiment, the first signaling comprises at least one RRC IE whose name comprises "numberOfPreamblesPerSSB-ForThisPartition".

As one embodiment, the first signaling comprises at least one RRC IE whose name comprises "ssb-SharedRO-MaskIndex".

As one embodiment, the first signaling comprises at least one RRC IE whose name comprises "rsrp-ThresholdSSB".

As one embodiment, the first signaling comprises at least one RRC IE whose name comprises "msgA-RSRP-Threshold".

As one embodiment, the first signaling comprises a first FeatureCombinationPreambles IE, wherein the first FeatureCombinationPreambles IE indicates the first random access resource group, the first FeatureCombinationPreambles IE comprises a first FeatureCombination IE, and the first FeatureCombination IE comprises a PRACH repetition indication.

As one embodiment, the first FeatureCombination IE comprises one RRC field, wherein the RRC field is set to true, and the RRC field indicates that the first random access resource group is used for a PRACH repetition.

As one embodiment, the first FeatureCombination IE comprising a PRACH repetition indication is used for determining that the first random access resource group can be used for a PRACH repetition.

As one embodiment, the first FeatureCombination IE comprises only a PRACH repetition indication.

As one embodiment, the first FeatureCombination IE comprises a PRACH repetition indication, and the first FeatureCombination IE comprises at least one of a RedCap indication, or an SDT indication, or an NSAG, or an MSG3 repetition indication.

As one embodiment, the first FeatureCombination IE does not comprise any of: a RedCap indication, or an SDT indication, or an NSAG, or an MSG3 repetition indication.

As one embodiment, the first signaling comprises the first information block.

As one embodiment, the first FeatureCombinationPreambles IE comprises the first information block.

As one embodiment, the first FeatureCombination IE comprises the first information block.

As one embodiment, the first FeatureCombination IE is the first information block.

As one embodiment, the first random access resource group is a group of random access resources.

As one embodiment, the first random access resource group comprises at least one random access resource.

As one embodiment, the first random access resource group comprises at least one Preamble.

As one embodiment, the first random access resource group is configured with only Preamble group A.

As one embodiment, the first random access resource group is configured with both Preamble group A and Preamble group B.

As one embodiment, the "selecting the first random access resource group" comprises: determining the first random access resource group.

As one embodiment, the "selecting the first random access resource group" comprises: selecting the first random access resource group from a plurality of specific and exclusively used random access resource groups.

As one embodiment, the "selecting the first random access resource group" comprises: selecting the first random access resource group from a plurality of random access resource groups.

As one embodiment, only the first random access resource group is one random access resource group that can be used for the first random access process.

As one embodiment, the second random access resource group is not configured.

As one embodiment, the second random access resource group cannot be used for the first random access process.

As one embodiment, in the first random access process, at least one SSB (Synchronization Signal Block) is selected and at least the first Preamble is determined based on the at least one SSB.

As one embodiment, in the first random access process, only one SSB is selected and only the first Preamble is determined based on the at least one SSB.

As one embodiment, in the first random access process, only one SSB is selected and the K1 Preambles are determined based on the at least one SSB; and the first Preamble is one Preamble of the K1 Preambles.

As one embodiment, in the first random access process, only one SSB is selected and not greater than the K1 first Preambles are determined based on the at least one SSB; and the first Preamble is one Preamble of the not greater than K1 Preambles.

As one embodiment, in the first random access process, a plurality of SSBs are selected and only the first Preamble is determined based on the plurality of SSBs.

As one embodiment, in the first random access process, a plurality of SSBs are selected and the K1 Preambles are determined based on the plurality of SSBs; and the first Preamble is one Preamble of the K1 Preambles.

As one embodiment, in the first random access process, a plurality of SSBs are selected and not greater than the K1 Preambles are determined based on the plurality of SSBs; and the first Preamble is one Preamble of the not greater than K1 Preambles.

As one embodiment, the first random access resource group comprises Q2 random access resource subgroups, a first random access resource subgroup is determined in the Q2 random access resource subgroups, and at least the first Preamble is determined in the first random access resource subgroup.

As one embodiment, the first signaling indicates a second random access resource group, the second random access resource group is used for a first feature, the first feature is one candidate feature in a first set of candidate features, and one feature in the first set of candidate features is one of a RedCap or an SDT or an NSAG or an MSG3 repetition; a priority of the first random access resource group being higher than a priority of the second random access resource group is used for selecting the first random access resource group; and the first random access resource group and the second random access resource group are different.

As one embodiment, the first node is configured with only the first random access resource group in the first cell.

As one embodiment, the first node is configured with at least the first random access resource group and the second random access resource group in the first cell.

As one embodiment, the first signaling comprises a second FeatureCombinationPreambles IE, wherein the second FeatureCombinationPreambles IE indicates the second random access resource group, the second FeatureCombinationPreambles IE comprises a second FeatureCombination IE, the second FeatureCombination IE comprises a first feature indication, and the second FeatureCombination IE does not comprise a PRACH repetition indication.

As one embodiment, the second FeatureCombination IE comprises at least one of a redCap-r1 field, or a smallData-r17 field, or an nsag-r17 field, or an msg3-Repetitions-r17 field, and the second FeatureCombination IE does not comprise one RRC field indicating a PRACH repetition.

As one embodiment, the first signaling is used for determining the second random access resource group.

As one embodiment, the first signaling is used for configuring the second random access resource group.

As one embodiment, the first signaling is used for determining each random access resource in the second random access resource group.

As one embodiment, the second random access resource group is configured for the first cell.

As one embodiment, the second random access resource group is configured for the first carrier.

As one embodiment, the second random access resource group is configured for the first BWP.

As one embodiment, the second random access resource group is configured for the first BWP of the first carrier of the first cell.

As one embodiment, the second random access resource group is exclusively used for a feature combination.

As one embodiment, the second random access resource group is used for at least one of a RedCap, or an SDT, or an NSAG, or an MSG3 repetition.

As one embodiment, both the first random access resource group and the second random access resource group are random access resource groups that can be used for the first random access process.

As one embodiment, the first random access resource group is selected from at least the first random access resource group and the second random access resource group.

As one embodiment, the first random access resource group and the second random access resource group are respectively a specific and exclusively used random access resource group.

As one embodiment, the first set of candidate features is configurable.

As one embodiment, the first set of candidate features is configured through the second FeatureCombination IE.

As one embodiment, the first set of candidate features comprises candidate features indicated by the second FeatureCombination IE.

As one embodiment, the second random access resource group is used for at least the first feature.

As one embodiment, the second random access resource group is used for each candidate feature in the first set of candidate features.

As one embodiment, the definition of RedCap refers to 3GPP TS 38 series.

As one embodiment, the definition of SDT refers to 3GPP TS 38 series.

As one embodiment, the definition of an NSAG refers to 3GPP TS 38 series.

As one embodiment, the definition of an MSG3 repetition refers to 3GPP TS 38 series.

As one embodiment, the first signaling comprises the first feature indication.

As one embodiment, the first feature indication is one of: a RedCap indication, or an SDT indication, or an NSAG indication, or an MSG3 repetition indication.

As one embodiment, the first feature is RedCap, and the first feature indication is a RedCap indication.

As one embodiment, the first feature is SDT, and the first feature indication is an SDT indication.

As one embodiment, the first feature is an NSAG, and the first feature indication is an NSAG indication.

As one embodiment, the first feature is an MSG3 repetition, and the first feature indication is an MSG3 repetition indication.

As one embodiment, the "a priority of the first random access resource group higher than a priority of the second random access resource group" means: the highest feature priority associated with the first random access resource group is higher than the highest feature priority associated with the second random access resource group.

As one embodiment, a feature priority of a PRACH repetition being higher than a feature priority of each candidate feature in the first set of candidate features is used to determine that a priority of the first random access resource group is higher than a priority of the second random access resource group.

As one embodiment, a feature priority of a PRACH repetition being higher than a feature priority of any one of a RedCap, or an SDT, or an NSAG, or an MSG3 repetition is used to determine that a priority of the first random access resource group is higher than a priority of the second random access resource group.

As one embodiment, each feature in a feature combination is assigned one feature priority.

As one embodiment, at least one feature in a feature combination is assigned one feature priority.

As one embodiment, a PRACH repetition is not assigned a feature priority.

As one embodiment, if a PRACH repetition is not assigned a feature priority, a priority of a PRACH repetition is higher than any assigned feature priority configured for the first BWP.

As one embodiment, a PRACH repetition is assigned a feature priority.

As one embodiment, the first signaling comprises a first RRC field, wherein the first RRC field indicates a feature priority, the first RRC field comprises a first RRC subfield, and the first RRC subfield indicates a feature priority of a PRACH repetition.

As one sub-embodiment of this embodiment, the first RRC field is a featurePriorities-r17 field.

As one sub-embodiment of this embodiment, a name of the first RRC field comprises featurePriorities.

As one sub-embodiment of this embodiment, a name of the first RRC subfield comprises at least one of prach, or rach, or preamble, or msg1, or Repetitions, or Priority, or -r18.

As one sub-embodiment of this embodiment, the first RRC subfield is an msg1-Repetitions-Priority-r18 field.

As one sub-embodiment of this embodiment, the first RRC subfield is a prach-Repetitions-Priority-r18 field.

As one sub-embodiment of this embodiment, the first RRC field comprises one RRC field indicating a feature priority of RedCap.

As one sub-embodiment of this embodiment, the first RRC field comprises one RRC field indicating a feature priority of SDT.

As one sub-embodiment of this embodiment, the first RRC field comprises one RRC field indicating a feature priority of an MSG3 repetition.

As one embodiment, the first random access resource group is used for a PRACH repetition, and the first random access resource group is used for a second feature, the second feature comprises at least one of a RedCap, or an SDT, or an NSAG, or an MSG3 repetition.

As one embodiment, the "the first random access resource group and the second random access resource group are different" means: the first random access resource group and the second random access resource group are used for different feature combinations.

As one embodiment, the "the first random access resource group and the second random access resource group are different" means: there is at least one different Preamble in the first random access resource group and the second random access resource group.

As one embodiment, the "the first random access resource group and the second random access resource group are different" means: there is at least one different PRACH occasion in the first random access resource group and the second random access resource group.

As one embodiment, the step S5202 exists, and at least one Preamble sent on the first set of time-frequency resources is received by the second node.

As one embodiment, the step S5202 exists, and each Preamble sent on the first set of time-frequency resources is received by the second node.

As one embodiment, the step S5202 does not exist, and any Preamble sent on the first set of time-frequency resources is not received.

### Embodiment 6

Embodiment 6 illustrates a flowchart of wireless signal transmission according to another embodiment of the present application, as shown in FIG. 6. It is particularly noted that the order in the present example does not limit the order of signal transmission and the order of implementation in the present application.

For a **first node U01,** in step S6101, a first random access process is initiated in response to a first event; in step S6102, in the first random access process, a type of the first random access process is set to a four-step random access process; in step S6103, in the first random access process, K1 is determined based on at least a second measurement result, and the K1 is a positive integer not less than 1; and in step S6104, at least a first Preamble is sent on a first set of time-frequency resources, wherein each time-frequency resource in the first set of time-frequency resources is used for Preamble.

For a **first node N02,** in step S6201, the first Preamble is received.

In Embodiment 6, the number of time-frequency resources comprised in the first set of time-frequency resources is greater than 1; and the K1 is not greater than the number of time-frequency resources comprised in the first set of time-frequency resources.

As one embodiment, in the first random access process, the first random access resource group is selected.

As one embodiment, in the first random access process, it is determined that a PRACH repetition is performed in the first random access process.

As one embodiment, in the first random access process, the number of time-frequency resources comprised in the first set of time-frequency resources is greater than 1.

As one embodiment, the K1 is equal to the number of time-frequency resources comprised in the first set of time-frequency resources.

As one embodiment, the K1 is less than or equal to the number of time-frequency resources comprised in the first set of time-frequency resources.

As one embodiment, the K1 is the number of time-frequency resources comprised in the first set of time-frequency resources.

As one embodiment, the K1 is the number of Preambles sent on the first set of time-frequency resources.

As one embodiment, the K1 is used for determining the number of Preambles sent on the first set of time-frequency resources.

As one embodiment, the K1 is used for determining the maximum number of Preambles sent on the first set of time-frequency resources.

As one embodiment, the K1 is related to at least channel quality.

As one embodiment, the K1 is related to a MAC sublayer counter.

As one sub-embodiment of this embodiment, the K1 is related to PREAMBLE_TRANSMISSION_COUNTER.

As one sub-embodiment of this embodiment, the K1 is related to PREAMBLE_POWER_RAMPING_COUNTER.

As one embodiment, the K1 is related to both channel quality and the above-mentioned MAC sublayer counter.

As one embodiment, the K1 is preconfigured.

As one embodiment, the K1 is configurable.

As one embodiment, the K1 is variable.

As one embodiment, the K1 is countable.

As one embodiment, the maximum value of the K1 does not exceed a positive integer.

As one embodiment, the "the K1 is a positive integer not less than 1" may be replaced by: the K1 is an integer not less than 2.

As one embodiment, the "K1 is a positive integer not less than 1" may be replaced by: the K1 is an integer greater than 1.

As one embodiment, the "K1 is a positive integer not less than 1" may be replaced by: the K1 is an integer greater than 2.

As one embodiment, the K1 is determined before sending a first Preamble on the first set of time-frequency resources.

As one embodiment, the K1 is determined based on at least the second measurement result and at least one offset.

As one embodiment, the second measurement result is a measurement result for a downlink pathloss reference.

As one embodiment, the second measurement result is a measurement result for at least one downlink reference signal.

As one sub-embodiment of this embodiment, each downlink reference signal in the at least one downlink reference signal is an SSB.

As one sub-embodiment of this sub-embodiment, each downlink reference signal in the at least one downlink reference signal is a CSI (Channel State Information)-RS (Reference Signal).

As one embodiment, the second measurement result is RSRP of a downlink pathloss reference.

As one embodiment, the second measurement result is SS-RSRP for one SSB.

As one embodiment, the second measurement result is CSI-RSRP for one CSI-RS.

As one embodiment, the first random access resource group comprises Q2 random access resource subgroups, a first random access resource subgroup is determined in the Q2 random access resource subgroups, and the K1 is determined in the first random access resource subgroup.

As one embodiment, each random access resource subgroup in the Q2 random access resource subgroups is associated with at least one SSB.

As one embodiment, each random access resource subgroup in the Q2 random access resource subgroups is associated with one SSB.

As one embodiment, each random access resource in each random access resource subgroup in the Q2 random access resource subgroups is configured for one PRACH repetition.

As one embodiment, each random access resource in each random access resource subgroup in the Q2 random access resource subgroups is configured for one PRACH repetition.

As one embodiment, each random access resource in each random access resource subgroup in the Q2 random access resource subgroups indicates PRACH repetition times.

As one embodiment, each random access resource in each random access resource subgroup in the Q2 random access resource subgroups does not indicate PRACH repetition times.

As one embodiment, at least one SSB is determined based on at least the second measurement result, a first random access resource subgroup is determined based on the at least one SSB, and the K1 is determined in the first random access resource subgroup.

As one embodiment, the K1 is determined in Q2 PRACH repetition times based on at least the second measurement result.

As one embodiment, K1 is determined based on at least the second measurement result and Q1 thresholds; and the Q1 is a positive integer.

As one embodiment, the Q2 is Q1 plus 1.

As one embodiment, the Q2 is not greater than Q1 plus 1.

As one sub-embodiment of this embodiment, the K1 is determined in the Q1 candidate integers based on at least channel quality.

As one sub-embodiment of this embodiment, the K1 is determined in the Q1 candidate integers based on at least channel quality and at least one offset.

As one embodiment, the Q1 power thresholds are used to determine Q2 power ranges; each power range of the Q2 power ranges is configured with one PRACH repetition time; and the K1 is equal to PRACH repetition times corresponding to a power range to which the second measurement result belongs.

As one sub-embodiment of this embodiment, the number of time-frequency resources comprised in the first set of time-frequency resources is equal to the K1.

As one sub-embodiment of this embodiment, when the Q1 is equal to 1, a first power range comprises values less than a first power threshold, and a PRACH repetition time corresponding to the first power range is equal to 2; and a second power range comprises values greater than a first power threshold, and a PRACH repetition time corresponding to the second power range is equal to 4.

As one sub-embodiment of this embodiment, when the Q1 is equal to 2, a first power range comprises values less than a first power threshold, and a PRACH repetition time corresponding to the first power range is equal to 2; a second power range comprises values greater than a first power threshold and less than a second power threshold, and a PRACH repetition time corresponding to the second power range is equal to 4; and a third power range comprises values greater than a second power threshold, and a PRACH repetition time corresponding to the second power range is equal to 6.

As one embodiment, the Q1 power thresholds are used to determine Q2 power ranges; each power range of the Q2 power ranges is configured with one maximum PRACH repetition time; and the K1 is equal to a maximum PRACH repetition time corresponding to a power range to which the second measurement result belongs.

As one sub-embodiment of this embodiment, the K1 is not greater than the number of time-frequency resources comprised in the first set of time-frequency resources.

As one sub-embodiment of this embodiment, when the Q1 is equal to 1, a first power range comprises values less than a first power threshold, and a maximum PRACH repetition time corresponding to the first power range is equal to 2; and a second power range comprises values greater than a first power threshold, and a maximum PRACH repetition time corresponding to the second power range is equal to 4.

As one sub-embodiment of this embodiment, when the Q1 is equal to 2, a first power range comprises values less than a first power threshold, and a maximum PRACH repetition time corresponding to the first power range is equal to 2; a second power range comprises values greater than a first power threshold and less than a second power threshold, and a maximum PRACH repetition time corresponding to the second power range is equal to 4; and a third power range comprises values greater than a second power threshold, and a maximum PRACH repetition time corresponding to the second power range is equal to 6.

As one embodiment, the "setting a type of the first random access process to a four-step random access process" means: set the RA_TYPE to 4-stepRA.

As one embodiment, in the first random access procedure initialization stage, a type of the first random access process is set to a four-step random access process.

As one embodiment, after performing BWP operation in the first random access process, a type of the first random access process is set to a four-step random access process.

As one embodiment, after selecting a random access resource group for the first random access process, a type of the first random access process is set to a four-step random access process.

As one embodiment, during selecting a random access resource group for the first random access process, a type of the first random access process is set to a four-step random access process.

As one embodiment, in the first random access process, the first random access resource group is selected as a random access resource group used for the first random access process.

As one embodiment, the first random access resource group being selected as a random access resource group used for the first random access process is used for determining that a type of the first random access process is set to a four-step random access process.

As one embodiment, in the first random access process, it is determined that a PRACH repetition is performed in the first random access process.

As one embodiment, determining that PRACH repetition is performed in the first random access process is used for determining that a type of the first random access process is set to a four-step random access process.

As one embodiment, in the first random access process, if the first random access resource group is selected, a type of the first random access process is set to a four-step random access process.

As one embodiment, in the first random access process, if it is determined that a PRACH repetition is performed in the first random access process, a type of the first random access process is set to a four-step random access process.

As one embodiment, the step S6201 exists, and at least one Preamble sent on the first set of time-frequency resources is received by the second node.

As one embodiment, the step S6201 exists, and each Preamble sent on the first set of time-frequency resources is received by the second node.

As one embodiment, the step S6201 does not exist, and any Preamble sent on the first set of time-frequency resources is not received.

### Embodiment 7

Embodiment 7 illustrates a schematic diagram showing that the number of time-frequency resources comprised in a first set of time-frequency resources depends on the first event according to one embodiment of the present application.

In Embodiment 7, the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.

As one embodiment, the "the number of time-frequency resources comprised in the first set of time-frequency resources depends on the first event" comprises: the number of time-frequency resources comprised in the first set of time-frequency resources depends on whether the first event belongs to the first set of candidate events or the second set of candidate events.

As one embodiment, the "the number of time-frequency resources comprised in the first set of time-frequency resources depends on the first event" comprises: when at least the first event belongs to the first set of candidate events, the number of time-frequency resources comprised in the first set of time-frequency resources is greater than 1; and when the first event belongs to the second set of candidate events, the number of time-frequency resources comprised in the first set of time-frequency resources is equal to 1.

As one embodiment, the "the number of time-frequency resources comprised in the first set of time-frequency resources depends on the first event" comprises: only when at least the first event belongs to the first set of candidate events, the number of time-frequency resources comprised in the first set of time-frequency resources is greater than 1.

As one embodiment, the "the number of time-frequency resources comprised in the first set of time-frequency resources depends on the first event" comprises: as long as the first event belongs to the second set of candidate events, the number of time-frequency resources comprised in the first set of time-frequency resources is equal to 1.

As one embodiment, the number of time-frequency resources comprised in the first set of time-frequency resources depends on the first event, and the number of time-frequency resources comprised in the first set of time-frequency resources depends on at least one of: a first information block or a first measurement result or whether the first BWP is configured with a random access resource for four-step random access.

As one embodiment, the number of time-frequency resources comprised in the first set of time-frequency resources does not depend on at least one of: a first information block or a first measurement result or whether the first BWP is configured with a random access resource for four-step random access.

As one embodiment, the first set of candidate events comprises only one candidate event.

As one embodiment, the first set of candidate events comprises at least one candidate event.

As one embodiment, the first set of candidate events comprises at least two candidate events.

As one embodiment, each candidate event in the first set of candidate events is used for triggering a random access process.

As one embodiment, the first set of candidate events does not comprise any event in the second set of candidate events.

As one embodiment, one event in the first set of candidate events is initial access.

As one embodiment, the initial access relates to initial access from RRC_IDLE state.

As one embodiment, one event in the first set of candidate events is an RRC Connection Re-establishment procedure.

As one embodiment, one event in the first set of candidate events is Scheduling Request (SR) failure.

As one embodiment, one event in the first set of candidate events is an RRC Connection Resume procedure from RRC_INACTIVE state.

As one embodiment, the second set of candidate events comprises only one candidate event.

As one embodiment, the second set of candidate events comprises at least one candidate event.

As one embodiment, the second set of candidate events comprises at least two candidate events.

As one embodiment, each candidate event in the second set of candidate events is used for triggering a random access process.

As one embodiment, one event in the second set of candidate events is triggered by BFR.

As one embodiment, one event in the second set of candidate events is BFR.

As one embodiment, the BFR is BFR for the first cell.

As one embodiment, the BFR is BFR for two sets of Beam Failure Detection (BFD)-RSs of the first cell.

As one embodiment, the first cell is configured with two sets of BFD-RSs.

As one embodiment, the first cell is not configured with two sets of BFD-RSs.

As one embodiment, the first cell is configured with only one set of BFD-RSs.

As one embodiment, when the first event is BFR of a SPCell of the first node, the number of time-frequency resources comprised in the first set of time-frequency resources is equal to 1.

As one embodiment, one event in the second set of candidate events relates to Listen Before Talk (LBT).

As one embodiment, one event in the second set of candidate events is consistent UL LBT failure on the first cell.

As one embodiment, one event in the second set of candidate events relates to a PDCCH order.

As one embodiment, one event in the second set of candidate events is a PDCCH order, and the PDCCH order indicates that ra-PreambleIndex is equal to 0b000000.

### Embodiment 8

Embodiment 8 illustrates a schematic diagram showing that the number of time-frequency resources comprised in a first set of time-frequency resources depends on a first information block according to one embodiment of the present application.

In Embodiment 8, the number of time-frequency resources comprised in the first set of time-frequency resources depends on a first information block; when at least the first node is configured with the first information block, the number of time-frequency resources comprised in the first set of time-frequency resources is greater than 1; and when the first node is not configured with the first information block, the number of time-frequency resources comprised in the first set of time-frequency resources is equal to 1.

As one embodiment, the "the number of time-frequency resources comprised in the first set of time-frequency resources depends on a first information block" comprises: when at least the first node is configured with the first information block, the number of time-frequency resources comprised in the first set of time-frequency resources is greater than 1; and when the first node is not configured with the first information block, the number of time-frequency resources comprised in the first set of time-frequency resources is equal to 1.

As one embodiment, the "the number of time-frequency resources comprised in the first set of time-frequency resources depends on a first information block" comprises: only when at least the first node is configured with the first information block, the number of time-frequency resources comprised in the first set of time-frequency resources is greater than 1.

As one embodiment, the "the number of time-frequency resources comprised in the first set of time-frequency resources depends on a first information block" comprises: as long as the first node is not configured with the first information block, the number of time-frequency resources comprised in the first set of time-frequency resources is equal to 1.

As one embodiment, the number of time-frequency resources comprised in the first set of time-frequency resources depends on a first information block, and the number of time-frequency resources comprised in the first set of time-frequency resources depends on at least one of: the first event or a first measurement result or whether the first BWP is configured with a random access resource for four-step random access.

As one embodiment, the number of time-frequency resources comprised in the first set of time-frequency resources does not depend on at least one of: the first event or a first measurement result or whether the first BWP is configured with a random access resource for four-step random access.

As one embodiment, the number of time-frequency resources comprised in the first set of time-frequency resources depends on the first event, and the number of time-frequency resources comprised in the first set of time-frequency resources depends on whether the first node is configured with the first information block.

As one embodiment, when at least the first event belongs to a first set of candidate events, and the first node is configured with the first information block, the number of time-frequency resources comprised in the first set of time-frequency resources is greater than 1; when the first event belongs to the second set of candidate events, the number of time-frequency resources comprised in the first set of time-frequency resources is equal to 1; and when the first node is not configured with the first information block, the number of time-frequency resources comprised in the first set of time-frequency resources is equal to 1.

As one embodiment, the first information block comprises configuration information for coverage enhancement.

As one embodiment, the first information block comprises configuration information for a PRACH repetition.

As one embodiment, the first information block comprises a maximum PRACH repetition time.

As one embodiment, the first information block comprises the first threshold in the present application.

As one embodiment, the first information block comprises Random Access resources used for a PRACH repetition.

As one embodiment, the first information block comprises a set (sets) of Random Access resources carrying a PRACH repetition indication.

As one embodiment, the first information block is configured for the first BWP.

As one sub-embodiment of this embodiment, the first BWP is determined in the first random access process.

As one sub-embodiment of this embodiment, the "the first BWP is determined" comprises: the first BWP is selected.

As one sub-embodiment of this embodiment, the "the first BWP is determined" comprises: the BWP is determined according to Section 5.15 of 3GPP TS38.321.

As one sub-embodiment of this embodiment, the first BWP is determined after determining one uplink carrier in the first random access process.

As one embodiment, the first information block comprises Random Access resources used for a PRACH repetition configured for the first BWP.

As one embodiment, the first information block comprises a set (sets) of Random Access resources carrying a PRACH repetition indication configured for the first BWP.

As one embodiment, the first information block comprises at least one RRC IE.

As one embodiment, the first information block comprises at least one RRC field.

As one embodiment, the first information block comprises an indication of whether a PRACH repetition is allowed.

As one embodiment, the first information block comprises a PRACH repetition indication.

As one embodiment, the first information block is a PRACH repetition indication.

As one embodiment, the first information block is a PRACH repetition indication.

As one embodiment, the first information block comprises one FeatureCombinationPreambles IE.

As one embodiment, the first information block comprises one FeatureCombination IE.

As one embodiment, the first information block belongs to one FeatureCombinationPreambles IE.

As one embodiment, the first information block belongs to one FeatureCombination IE.

As one embodiment, the first information block is one RRC field in one FeatureCombination IE.

As one embodiment, the first information block is one prach-Repetitions-r18 field in one FeatureCombination IE.

As one embodiment, the first information block is an RRC field in one FeatureCombination IE whose name comprises at least one of prach, or rach, or preamble, or msg1, or Repetitions, or r18.

As one embodiment, the "the first node is configured with the first information block" comprises: the first node receives the first information block.

As one embodiment, the "the first node is configured with the first information block" comprises: the first node is indicated the first information block.

As one embodiment, the "the first node is configured with the first information block" comprises: the first node receives the first information block, and the first information block is set to ture.

As one embodiment, if the first node receives the first information block, the first node is configured with the first information block; otherwise, the first node is not configured with the first information block.

As one embodiment, if the first node is indicated the first information block, the first node is configured with the first information block; otherwise, the first node is not configured with the first information block.

As one embodiment, if the first node receives the first information block, and the first information block is set to ture, the first node is configured with the first information block; otherwise, the first node is not configured with the first information block.

### Embodiment 9

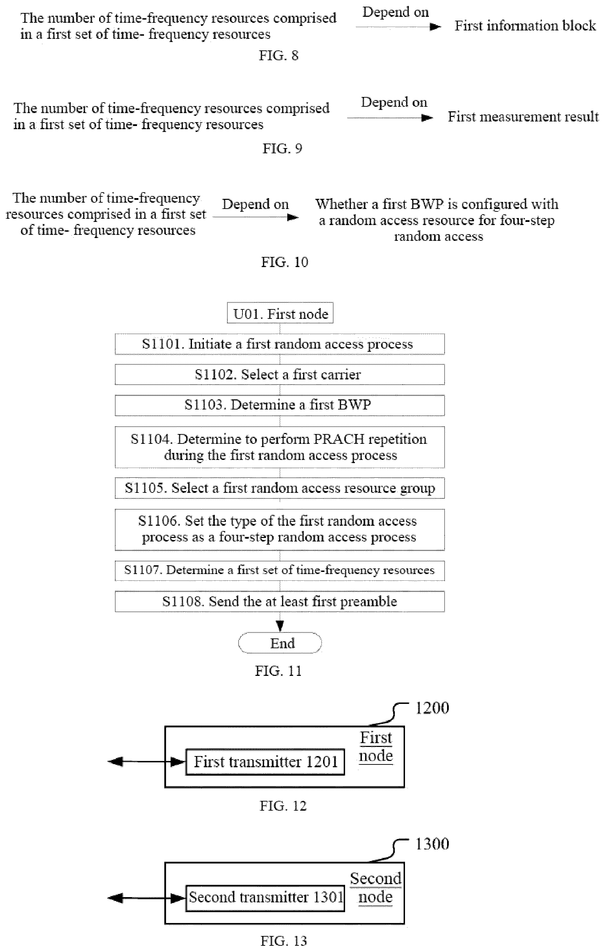

Embodiment 9 illustrates a schematic diagram showing that the number of time-frequency resources comprised in a first set of time-frequency resources depends on a first measurement result according to one embodiment of the present application, as shown in FIG. 9.

In Embodiment 9, the number of time-frequency resources comprised in the first set of time-frequency resources depends on a first measurement result; when at least the first measurement result is less than a first threshold, the number of time-frequency resources comprised in the first set of time-frequency resources is greater than 1; when the first measurement result is greater than a first threshold, the number of time-frequency resources comprised in the first set of time-frequency resources is equal to 1; and the first threshold is configurable.

As one embodiment, the "the number of time-frequency resources comprised in the first set of time-frequency resources depends on a first measurement result" comprises: the number of time-frequency resources comprised in the first set of time-frequency resources depends on a size relationship between the first measurement result and the first threshold.

As one embodiment, the "the number of time-frequency resources comprised in the first set of time-frequency resources depends on a first measurement result" comprises: when at least the first measurement result is less than the first threshold, the number of time-frequency resources comprised in the first set of time-frequency resources is greater than 1; and when the first measurement result is greater than the first threshold, the number of time-frequency resources comprised in the first set of time-frequency resources is equal to 1.

As one embodiment, the "the number of time-frequency resources comprised in the first set of time-frequency resources depends on a first measurement result" comprises: only when at least the first measurement result is less than the first threshold, the number of time-frequency resources comprised in the first set of time-frequency resources is greater than 1.

As one embodiment, the "the number of time-frequency resources comprised in the first set of time-frequency resources depends on a first measurement result" comprises: as long as the first measurement result is greater than the first threshold, the number of time-frequency resources comprised in the first set of time-frequency resources is equal to 1.

As one embodiment, the number of time-frequency resources comprised in the first set of time-frequency resources depends on a first measurement result, and the number of time-frequency resources comprised in the first set of time-frequency resources depends on at least one of: the first event or a first information block or whether the first BWP is configured with a random access resource for four-step random access.

As one embodiment, the number of time-frequency resources comprised in the first set of time-frequency resources does not depend on at least one of: the first event or a first information block or whether the first BWP is configured with a random access resource for four-step random access.

As one embodiment, the first measurement result is a measurement result for a downlink pathloss reference.

As one embodiment, the first measurement result is a measurement result for at least one downlink reference signal.

As one sub-embodiment of this embodiment, each downlink reference signal in the at least one downlink reference signal is an SSB.

As one sub-embodiment of this embodiment, each downlink reference signal in the at least one downlink reference signal is a CSI-RS.

As one embodiment, the first measurement result is RSRP of a downlink pathloss reference.

As one embodiment, the first measurement result is SS (Synchronization Signal)-RSRP for one SSB.

As one embodiment, the first measurement result is CSI-RSRP for one CSI-RS.

As one embodiment, the measurement result is RSRP.

As one embodiment, the measurement result is RSRQ (Reference Signal Received Quality).

As one embodiment, the measurement result is L1 (Layer 1)-RSRP.

As one embodiment, the measurement result is L1-RSRQ.

As one embodiment, the measurement result is SS-RSRP.

As one embodiment, the measurement result is CSI-RSRP.

As one embodiment, the first threshold is preconfigured.

As one embodiment, the first threshold is configured via an RRC message.

As one embodiment, the first threshold is not msgA-RSRP-Threshold.

As one embodiment, the first threshold is not rsrp-ThresholdSSB-SUL.

As one embodiment, the first threshold is not sdt-RSRP-Threshold.

As one embodiment, the first threshold is not cg-SDT-RSRP-ThresholdSSB.

As one embodiment, the first threshold is not rsrp-ThresholdSSB.

As one embodiment, the first threshold is rsrp-ThresholdSSB.

As one embodiment, the first threshold is an RSRP threshold used for determining whether to perform a PRACH repetition.

As one embodiment, the first threshold is used for determining whether to perform a PRACH repetition.

As one embodiment, the first threshold is not msgA-RSRP-Threshold, the first threshold is not rsrp-ThresholdSSB-SUL, the first threshold is not sdt-RSRP-Threshold, and the first threshold is not cg-SDT-RSRP-ThresholdSSB.

As one embodiment, one RRC field is used for indicating the first threshold.

As one embodiment, one RRC field in the first information block indicates the first threshold.

As one embodiment, one RRC field outside the first information block indicates the first threshold.

As one embodiment, one RRC field in the first signaling indicates the first threshold.

As one embodiment, one RRC field outside the first signaling indicates the first threshold.

### Embodiment 10

Embodiment 10 illustrates a schematic diagram showing that the number of time-frequency resources comprised in a first set of time-frequency resources depends on whether a first BWP is configured with a random access resource for four-step random access according to one embodiment of the present application, as shown in FIG. 10 .

In Embodiment 10, in the first random access process, a first BWP is determined; the number of time-frequency resources comprised in the first set of time-frequency resources depends on whether the first BWP is configured with a random access resource for four-step random access; when at least the first BWP is configured with a random access resource for four-step random access, the number of time-frequency resources comprised in the first set of time-frequency resources is greater than 1; and when the first BWP is not configured with a random access resource for four-step random access, the number of time-frequency resources comprised in the first set of time-frequency resources is equal to 1.

As one embodiment, the "the number of time-frequency resources comprised in the first set of time-frequency resources depends on whether the first BWP is configured with a random access resource for four-step random access" comprises: when at least the first BWP is configured with a random access resource for four-step random access, the number of time-frequency resources comprised in the first set of time-frequency resources is greater than 1; and when the first BWP is not configured with a random access resource for four-step random access, the number of time-frequency resources comprised in the first set of time-frequency resources is equal to 1.

As one embodiment, the "the number of time-frequency resources comprised in the first set of time-frequency resources depends on whether the first BWP is configured with a random access resource for four-step random access" comprises: only when at least the first BWP is configured with a random access resource for four-step random access, the number of time-frequency resources comprised in the first set of time-frequency resources is greater than 1.

As one embodiment, the "the number of time-frequency resources comprised in the first set of time-frequency resources depends on whether the first BWP is configured with a random access resource for four-step random access" comprises: as long as the first BWP is not configured with a random access resource for four-step random access, the number of time-frequency resources comprised in the first set of time-frequency resources is equal to 1.

As one embodiment, the number of time-frequency resources comprised in the first set of time-frequency resources depends on whether the first BWP is configured with a random access resource for four-step random access, and the number of time-frequency resources comprised in the first set of time-frequency resources depends on at least one of: the first event or a first information block or a first measurement result.

As one embodiment, the number of time-frequency resources comprised in the first set of time-frequency resources does not depend on at least one of: the first event or a first information block or a first measurement result.

As one embodiment, in the first random access process, the first BWP is determined by performing a BWP operation process.

As one embodiment, in the first random access process, the first BWP is determined according to Section 5.15 of 3GPP TS38.321.

As one embodiment, the first BWP is one uplink BWP.

As one embodiment, the first BWP is one initial uplink BWP.

As one embodiment, the first BWP belongs to the first carrier.

As one embodiment, a PRACH repetition is only used for four-step random access.

As one embodiment, a PRACH repetition is not used for two-step random access.

As one embodiment, if the first BWP is configured with RACH-ConfigCommon, the first BWP is configured with a random access resource for four-step random access.

As one embodiment, if the first BWP is configured with RACH-ConfigCommonTwoStepRA, the first BWP is configured with a random access resource for two-step random access.

### Embodiment 11

Embodiment 11 illustrates a flowchart of a first random access process according to one embodiment of the present application, as shown in FIG. 11. It is particularly noted that the order in the present example does not limit the order of signal transmission and the order of implementation in the present application.

For a **first node U01**, in step S1101, a first random access process is initiated in response to a first event; in step S1102, a first carrier wave is selected; in step S1103, a first BWP is determined; in step S1104, it is determined that a PRACH repetition is performed in the first random access process; in step S1105, a first random access resource group is selected; in step S1106, a type of a first random access process is set to a four-step random access process; in step S1107, a first set of time-frequency resources is determined; and in step S1108, at least a first Preamble is sent on a first set of time-frequency resources, wherein each time-frequency resource in the first set of time-frequency resources is used for Preamble.

In Embodiment 11, the number of time-frequency resources comprised in the first set of time-frequency resources is greater than 1.

Typically, the step S1101, the step S1102, the step S1103, the step S1104, the step S1105, the step S1106, and the step S1107 are performed sequentially.

As one embodiment, the step S1104 belongs to the step S1107.

As one embodiment, the K1 in the present application is determined in the step S1104.

As one embodiment, the K1 in the present application is determined in the step S1107.

As one embodiment, in step S1107, a random access resource selection procedure is performed; and the first set of time-frequency resources is determined in the random access resource selection procedure.

As one embodiment, the first carrier is determined based on whether at least an NUL and an SUL are configured with random access resources for a PRACH repetition.

As one embodiment, whether the first carrier is an NUL or an SUL depends on the first event.

As one sub-embodiment of this embodiment, when at least the first event belongs to the first set of candidate events, the first carrier is an NUL; and when the first event belongs to the second set of candidate events, the first carrier is an SUL.

As one sub-embodiment of this embodiment, when at least the first event belongs to the first set of candidate events, the first carrier is an SUL; and when the first event belongs to the second set of candidate events, the first carrier is an NUL.

As one embodiment, whether the first carrier is an NUL or an SUL depends on a first information block.

As one sub-embodiment of this embodiment, when at least the first node is configured with the first information block, the first carrier is an NUL; and when the first node is not configured with the first information block, the first carrier is an SUL.

As one sub-embodiment of this embodiment, when at least the first node is configured with the first information block, the first carrier is an SUL; and when the first node is not configured with the first information block, the first carrier is an NUL.

As one embodiment, the first carrier is selected based on whether the first node is configured with the first information block.

As one embodiment, whether the first carrier is an NUL or an SUL depends on the first measurement result.

As one sub-embodiment of this embodiment, when at least the first measurement result is less than a first threshold, the first carrier is an NUL; and when the first measurement result is greater than a first threshold, the first carrier is an SUL.

As one sub-embodiment of this embodiment, when at least the first measurement result is less than a first threshold, the first carrier is an SUL; and when the first measurement result is greater than a first threshold, the first carrier is an NUL.

As one embodiment, the first carrier is selected based on the first measurement result.

As one embodiment, whether the first carrier is an NUL or an SUL depends on whether a random access resource for four-step random access is configured.

As one sub-embodiment of this embodiment, when at least one BWP is configured with a random access resource for four-step random access, the first carrier is an NUL; and when no BWP is configured with a random access resource for four-step random access, the first carrier is an SUL.

As one sub-embodiment of this embodiment, when at least one BWP is configured with a random access resource for four-step random access, the first carrier is an SUL; and when no BWP is configured with a random access resource for four-step random access, the first carrier is an NUL.

As one embodiment, the first carrier is selected based on whether a random access resource for four-step random access is configured.

As one embodiment, the first carrier is selected based on whether at least an NUL and an SUL are configured with random access resources for a PRACH repetition and RSRP of a downlink pathloss reference.

As one embodiment, when RSRP of a downlink pathloss reference is less than a first RSRP threshold, an SUL is selected; and when RSRP of a downlink pathloss reference is greater than a first RSRP threshold, an NUL is selected.

As one embodiment, when RSRP of a downlink pathloss reference is less than a first RSRP threshold and an NUL is not configured with random access resources for a PRACH repetition, an SUL is selected; and when RSRP of a downlink pathloss reference is greater than a first RSRP threshold, an NUL is selected. When.

As one embodiment, the first RSRP threshold is rsrp-ThresholdSSB-SUL.

As one embodiment, when a first set of conditions is satisfied, the first random access resource group is selected.

As one embodiment, the first set of conditions comprises at least one of: the first event belongs to a first set of candidate events, or the first node is configured with the first information block, or the first measurement result is less than a first threshold, or the first BWP is configured with a random access resource for four-step random access.

As one embodiment, the first random access resource group is determined based on at least one of: a first event or a first information block or a first measurement result or whether the first BWP is configured with a random access resource for four-step random access.

As one embodiment, the first random access resource group is selected only when at least the first event belongs to a first set of candidate events, and the first measurement result is less than a first threshold, and the first node is configured with the first information block, and the first BWP is configured with a random access resource for four-step random access.

As one embodiment, the first random access resource group is selected only when at least the first measurement result is less than a first threshold and the first node is configured with the first information block.

As one embodiment, the first random access resource group is selected only when at least the first event belongs to a first set of candidate events, and the first measurement result is less than a first threshold, and the first node is configured with the first information block.

As one embodiment, whether the first random access resource group is selected is used for determining the number of time-frequency resources comprised in the first set of time-frequency resources.

As one embodiment, the first signaling indicates the first random access resource group.

### Embodiment 12

Embodiment 12 illustrates a structural block diagram of a processing apparatus for a first node according to one embodiment of the present application; as shown in FIG. 12. In FIG. 12, the processing apparatus 1200 in the first node comprises a first processor 1201.

The first processor 1201 initiates a first random access process in response to a first event; sends at least a first Preamble on a first set of time-frequency resources, wherein each time-frequency resource in the first set of time-frequency resources is used for Preamble; and
in Embodiment 12, the number of time-frequency resources comprised in the first set of time-frequency resources depends on at least one of: the first event, or the first information block in the present application, or the first measurement result in the present application, or whether the first BWP in the present application is configured with a random access resource for four-step random access.

As one embodiment, the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.

As one embodiment, the number of time-frequency resources comprised in the first set of time-frequency resources depends on a first information block; when at least the first node is configured with the first information block, the number of time-frequency resources comprised in the first set of time-frequency resources is greater than 1; and when the first node is not configured with the first information block, the number of time-frequency resources comprised in the first set of time-frequency resources is equal to 1.

As one embodiment, the number of time-frequency resources comprised in the first set of time-frequency resources depends on a first measurement result; when at least the first measurement result is less than a first threshold, the number of time-frequency resources comprised in the first set of time-frequency resources is greater than 1; when the first measurement result is greater than a first threshold, the number of time-frequency resources comprised in the first set of time-frequency resources is equal to 1; and the first threshold is configurable.

As one embodiment, in the first random access process, a first BWP is determined; the number of time-frequency resources comprised in the first set of time-frequency resources depends on whether the first BWP is configured with a random access resource for four-step random access; when at least the first BWP is configured with a random access resource for four-step random access, the number of time-frequency resources comprised in the first set of time-frequency resources is greater than 1; and when the first BWP is not configured with a random access resource for four-step random access, the number of time-frequency resources comprised in the first set of time-frequency resources is equal to 1.

As one embodiment, the first processor 1201 determines K1 based on at least a second measurement result in the first random access process; wherein the K1 is a positive integer not less than 1; and the K1 is not greater than the number of time-frequency resources comprised in the first set of time-frequency resources.

As one embodiment, the first processor 1201 sets a type of the first random access process to a four-step random access process in the first random access process; wherein, the number of time-frequency resources comprised in the first set of time-frequency resources is greater than 1.

As one embodiment, the first processor 1201 receives first signaling, wherein the first signaling indicates a first random access resource group; selects the first random access resource group; determines at least the first Preamble in the first random access resource group;
wherein, the first random access resource group is used for a PRACH repetition; and the number of time-frequency resources comprised in the first set of time-frequency resources is greater than 1.

As one embodiment, the first signaling indicates a second random access resource group, the second random access resource group is used for a first feature, the first feature is one candidate feature in a first set of candidate features, and one feature in the first set of candidate features is one of a RedCap or an SDT or an NSAG or an MSG3 repetition; a priority of the first random access resource group being higher than a priority of the second random access resource group is used for selecting the first random access resource group; and the first random access resource group and the second random access resource group are different.

As one embodiment, the first processor 1201 comprises at least one of a first receiver or a first transmitter.

As one embodiment, the first processor 1201 comprises a first receiver and a first transmitter.

As one embodiment, the first processor 1201 comprises a first receiver.

As one embodiment, the first processor 1201 comprises a first transmitter.

As one embodiment, the first receiver comprises an antenna 452, a receiving device 454, a multi-antenna receiving processor 458, a receiving processor 456, a controller/processor 459, a memory 460, and a data source 467 in FIG. 4 of the present application.

As one embodiment, the first receiver comprises an antenna 452, a receiving device 454, a multi-antenna receiving processor 458, and a receiving processor 456 in FIG. 4 of the present application.

As one embodiment, the first receiver comprises an antenna 452, a receiving device 454, and a receiving processor 456 in FIG. 4 of the present application.

As one embodiment, the first transmitter comprises an antenna 452, a transmitting device 454, a multi-antenna transmitting processor 457, a transmitting processor 468, a controller/processor 459, a memory 460, and a data source 467 in FIG. 4 of the present application.

As one embodiment, the first transmitter comprises an antenna 452, a transmitting device 454, a multi-antenna transmitting processor 457, and a transmitting processor 468 in FIG. 4 of the present application.

As one embodiment, the first transmitter comprises an antenna 452, a transmitting device 454, and a transmitting processor 468 in FIG. 4 of the present application.

### Embodiment 13

Embodiment 13 illustrates a structural block diagram of a processing apparatus used in a second node according to one embodiment of the present application; as shown in FIG. 13. In FIG. 13, the processing apparatus 1300 in a second node comprises a second processor 1301.

The second processor 1301 receives at least a first Preamble in a first random access process, wherein the at least first Preamble is sent on a first set of time-frequency resources, and each time-frequency resource in the first set of time-frequency resources is used for Preamble; and

In Embodiment 13, the number of time-frequency resources comprised in the first set of time-frequency resources depends on at least one of: the first event, or the first information block in the present application, or the first measurement result in the present application, or whether the first BWP in the present application is configured with a random access resource for four-step random access.

As one embodiment, the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.

As one embodiment, the number of time-frequency resources comprised in the first set of time-frequency resources depends on a first information block; when at least the first node is configured with the first information block, the number of time-frequency resources comprised in the first set of time-frequency resources is greater than 1; and when the first node is not configured with the first information block, the number of time-frequency resources comprised in the first set of time-frequency resources is equal to 1.

As one embodiment, the number of time-frequency resources comprised in the first set of time-frequency resources depends on a first measurement result; when at least the first measurement result is less than a first threshold, the number of time-frequency resources comprised in the first set of time-frequency resources is greater than 1; when the first measurement result is greater than a first threshold, the number of time-frequency resources comprised in the first set of time-frequency resources is equal to 1; and the first threshold is configurable.

As one embodiment, in the first random access process, a first BWP is determined; the number of time-frequency resources comprised in the first set of time-frequency resources depends on whether the first BWP is configured with a random access resource for four-step random access; when at least the first BWP is configured with a random access resource for four-step random access, the number of time-frequency resources comprised in the first set of time-frequency resources is greater than 1; and when the first BWP is not configured with a random access resource for four-step random access, the number of time-frequency resources comprised in the first set of time-frequency resources is equal to 1.

As one embodiment, at least a second measurement result is used for determining K1 in the first random access process; the K1 is a positive integer not less than 1; and the K1 is not greater than the number of time-frequency resources comprised in the first set of time-frequency resources.

As one embodiment, in the first random access process, a type of the first random access process is set to a four-step random access process; and the number of time-frequency resources comprised in the first set of time-frequency resources is greater than 1.

As one embodiment, the second processor 1301 transmits first signaling, wherein the first signaling indicates a first random access resource group; wherein the first random access resource group is selected; the at least first Preamble is determined in the first random access resource group; the first random access resource group is used for a PRACH repetition, and the number of time-frequency resources comprised in the first set of time-frequency resources is greater than 1.

As one embodiment, the first signaling indicates a second random access resource group, the second random access resource group is used for a first feature, the first feature is one candidate feature in a first set of candidate features, and one feature in the first set of candidate features is one of a RedCap or an SDT or an NSAG or an MSG3 repetition; a priority of the first random access resource group being higher than a priority of the second random access resource group is used for selecting the first random access resource group; and the first random access resource group and the second random access resource group are different.

As one embodiment, the second processor 1301 comprises at least one of a second receiver or a second transmitter.

As one embodiment, the second processor 1301 comprises a second receiver and a second transmitter.

As one embodiment, the second processor 1301 comprises a second receiver.

As one embodiment, the second processor 1301 comprises a second transmitter.

As one embodiment, the second transmitter comprises an antenna 420, a transmitting device 418, a multi-antenna transmitting processor 471, a transmitting processor 416, a controller/processor 475, and a memory 476 in FIG. 4 of the present application.

As one embodiment, the second transmitter comprises an antenna 420, a transmitting device 418, a multi-antenna transmitting processor 471, and a transmitting processor 416 in FIG. 4 of the present application.

As one embodiment, the second transmitter comprises an antenna 420, a transmitting device 418, and a transmitting processor 416 in FIG. 4 of the present application.

As one embodiment, the second receiver comprises an antenna 420, a receiving device 418, a multi-antenna receiving processor 472, a receiving processor 470, a controller/processor 475, and a memory 476 in FIG. 4 of the present application.

As one embodiment, the second receiver comprises an antenna 420, a receiving device 418, a multi-antenna receiving processor 472, and a receiving processor 470 in FIG. 4 of the present application.

As one embodiment, the second receiver comprises an antenna 420, a receiving device 418, and a receiving processor 470 in FIG. 4 of the present application.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. User equipment, terminals and UE in the present application comprise but are not limited to wireless communication equipment such as drones, communication modules on drones, remote-controlled aircrafts, flying machines, small aircrafts, mobile phones, tablets, notebook computers, vehicle communication equipment, wireless sensors, network cards, Internet of Things terminals, RFID terminals, NB-IOT terminals, MTC (Machine Type Communication) terminals, eMTC (enhanced MTC) terminals, data cards, network cards, vehicle communication equipment, low-cost mobile phones, and low-cost tablets. The base station or system equipment in the present application comprises but is not limited to wireless communication equipment such as macro cellular base stations, micro cellular base stations, home base stations, relay base stations, gNB (NR Node B) NR Node B, TRPs (Transmitter Receiver Point).

The above is only a preferred embodiment of the present application and is not intended to limit the scope of protection of the present application. Any modifications, equivalent substitutions, improvements and the like made within the spirit and principles of the present invention shall be comprised within the scope of protection of the present invention.

## Claims

1. A first node used for wireless communication, comprising:
a first processor for initiating a first random access process in response to a first event; and sending at least a first Preamble on a first set of time-frequency resources, wherein each time-frequency resource in the first set of time-frequency resources is used for Preamble;
wherein, the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.

2. The first node according to claim 1, wherein the number of time-frequency resources comprised in the first set of time-frequency resources depends on a first information block, when at least the first node is configured with the first information block, the number of time-frequency resources comprised in the first set of time-frequency resources is greater than 1; and when the first node is not configured with the first information block, the number of time-frequency resources comprised in the first set of time-frequency resources is equal to 1.

3. The first node according to claim 1 or 2, wherein the number of time-frequency resources comprised in the first set of time-frequency resources depends on a first measurement result; when at least the first measurement result is less than a first threshold, the number of time-frequency resources comprised in the first set of time-frequency resources is greater than 1; and when the first measurement result is greater than the first threshold, the number of time-frequency resources comprised in the first set of time-frequency resources is equal to 1; wherein the first threshold is configurable.

4. The first node according to any one of claims 1 to 3, wherein during the first random access process, a first BWP is determined; the number of time-frequency resources comprised in the first set of time-frequency resources depends on whether the first BWP is configured with a random access resource for four-step random access; when at least the first BWP is configured with the random access resource for four-step random access, the number of time-frequency resources comprised in the first set of time-frequency resources is greater than 1; and when the first BWP is not configured with the random access resource for four-step random access, the number of time-frequency resources comprised in the first set of time-frequency resources is equal to 1.

5. The first node according to any one of claims 1 to 4, comprising:
the first processor for determining K1 based on at least a second measurement result during the first random access process,
wherein the K1 is a positive integer not less than 1; and the K1 is not greater than the number of time-frequency resources comprised in the first set of time-frequency resources.

6. The first node according to any one of claims 1 to 5, comprising:
the first processor for setting a type of the first random access process as a four-step random access process during the first random access process,
wherein, the number of time-frequency resources comprised in the first set of time-frequency resources is greater than 1.

7. The first node according to any one of claims 1 to 6, comprising:
the first processor for receiving first signaling, wherein the first signaling indicates a first random access resource group; selecting the first random access resource group; and determining at least the first Preamble in the first random access resource group,
wherein, the first random access resource group is used for PRACH repetition; and the number of time-frequency resources comprised in the first set of time-frequency resources is greater than 1.

8. The first node according to claim 7, wherein the first signaling indicates a second random access resource group, the second random access resource group is used for a first feature, the first feature is a candidate feature in a first set of candidate features, and one feature in the first set of candidate features is one of RedCap or SDT or NSAG or MSG3 repetition; a priority of the first random access resource group being higher than a priority of the second random access resource group is used for selecting the first random access resource group; and the first random access resource group and the second random access resource group are different.

9. A second node used for wireless communication, comprising:
a second processor for, during a first random access process, receiving at least a first Preamble, wherein at least the first Preamble is sent on a first set of time-frequency resources, and each time-frequency resource in the first set of time-frequency resources is used for Preamble,
wherein, in response to a first event, the first random access process is initiated; the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.

10. A method used in a first node for wireless communication, comprising:
in response to a first event, initiating a first random access process; and sending at least a first Preamble on a first set of time-frequency resources, wherein each time-frequency resource in the first set of time-frequency resources is used for Preamble;
wherein, the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.

11. A method used in a second node for wireless communication, comprising:
during a first random access process, receiving at least a first Preamble, wherein at least the first Preamble is sent on a first set of time-frequency resources, and each time-frequency resource in the first set of time-frequency resources is used for Preamble;
wherein, in response to a first event, the first random access process is initiated; the number of time-frequency resources comprised in the first set of time-frequency resources depends on the first event; when at least the first event belongs to a first set of candidate events, the number of time-frequency resources comprised in the first set of time-frequency resources is greater than 1; when the first event belongs to a second set of candidate events, the number of time-frequency resources comprised in the first set of time-frequency resources is equal to 1; an event in the first set of candidate events is related to initial access; and an event in the second set of candidate events is related to BFR.
